# EUROPEAN PATENT APPLICATION

(11) **EP 4 742 818 A1**
(43) Date of publication of application: **13.05.2026**
(21) Application number: 24843267.6
(22) Date of filing: 16.05.2024
(51) Int. Cl.: H04W 76/14, H04W 4/80, H04W 12/041, H04W 12/33, H04W 12/50, H04W 12/69, H04W 8/00, H04W 88/06, H04B 1/3827

(54) **ELECTRONIC DEVICE, METHOD, AND COMPUTER-READABLE MEDIUM FOR CONNECTING TO WEARABLE DEVICE**

(30) Priority: 20.07.2023 KR 20230094921; 25.09.2023 KR 20230128623
(71) Applicant: Samsung Electronics Co., Ltd., Suwon-si, Gyeonggi-do 16677 (KR)
(72) Inventor: LEE, Jaehyeok, Suwon-si Gyeonggi-do 16677 (KR); AHN, Gwangseo, Suwon-si Gyeonggi-do 16677 (KR); LEE, Jaehoon, Suwon-si Gyeonggi-do 16677 (KR)
(74) Representative: Gulde & Partner
(86) International application number: PCT/KR2024/006683
(87) International publication number: WO 2025/018544

(57) **Abstract**

This electronic device may comprise a wireless communication circuit, a display, a memory for storing instructions, and at least one processor. The instructions may cause, when executed by the at least one processor, the electronic device to: receive an advertising signal from a wearable device via the wireless communication circuit; transmit user identification information associated with the electronic device to the wearable device via the wireless communication circuit; receive, from the wearable device via the wireless communication circuit, response information indicating that the user identification information associated with the electronic device corresponds to user identification information associated with the wearable device; on the basis of the response information, transmit, to the wearable device via the wireless communication circuit, a request message for changing a mode of the wearable device to a transfer mode for connecting the wearable device and the electronic device without resetting the wearable device; receive a response message to the request message from the wearable device via the wireless communication circuit; and perform a configuration procedure for the wearable device on the basis of the response message.

## Description

### [Technical Field]

The present disclosure relates to an electronic device, a method, and a computer-readable medium for connecting with a wearable device.

### [Background Art]

An electronic device may be connected to one or more devices. For example, the electronic device may be connected to a wearable device. The electronic device may transmit a signal to the wearable device. The wearable device may transmit a signal to the electronic device.

The above-described information may be provided as a related art for the purpose of helping understanding of the present disclosure. No claim or determination is raised as to whether any of the above-described descriptions may be applied as a prior art related to the present disclosure.

### [Disclosure]

### [Technical Solution]

In embodiments, an electronic device is provided. The electronic device may include wireless communication circuitry, a display, memory storing instructions, and at least one processor. The instructions, when executed by the at least one processor, may cause the electronic device to receive, from a wearable device through the wireless communication circuitry, an advertising signal, transmit, to the wearable device through the wireless communication circuitry, user identification information associated with the electronic device, receive, from the wearable device through the wireless communication circuitry, response information indicating that the user identification information associated with the electronic device corresponds to user identification information associated with the wearable device, transmit, to the wearable device through the wireless communication circuitry, a request message for changing a mode of the wearable device to a transfer mode for connecting the electronic device to the wearable device without a reset of the wearable device, based on the response information, and receive, from the wearable device through the wireless communication circuitry, a response message for the request message. The response message may include identification information for the wearable device. The instructions, when executed by the at least one processor, may cause the electronic device to perform a setting procedure for the wearable device based on the identification information.

In embodiments, a wearable device is provided. The wearable device may include wireless communication circuitry, memory storing instructions, and at least one processor. The instructions, when executed by the at least one processor, may cause the wearable device to broadcast, through the wireless communication circuitry, an advertising signal, receive, from an electronic device through the wireless communication circuitry, user identification information associated with the electronic device, transmit, to the electronic device, response information indicating that the user identification information associated with the electronic device corresponds to user identification information associated with the wearable device, receive, from the electronic device through the wireless communication circuitry, a request message for changing a mode of the wearable device, after transmitting the response information, change the mode of the wearable device, based on the request message, to a transfer mode for connecting the electronic device to the wearable device without a reset of the wearable device, and transmit, to the electronic device through the wireless communication circuitry, a response message for the request message. The response message may include identification information for the wearable device. The instructions, when executed by the at least one processor, may cause the wearable device to perform a connection procedure with the electronic device based on the identification information.

In embodiments, a non-transitory computer-readable medium is provided. The non-transitory computer-readable medium may include memory storing instructions. The instructions, when executed by at least one processor, may cause an electronic device to receive, from a wearable device, an advertising signal, transmit, to the wearable device, user identification information associated with the electronic device, receive, from the wearable device, response information indicating that the user identification information associated with the electronic device corresponds to user identification information associated with the wearable device, transmit, to the wearable device, a request message for changing a mode of the wearable device to a transfer mode for connecting the electronic device to the wearable device without a reset of the wearable device, based on the response information, and receive, from the wearable device, a response message for the request message. The response message may include identification information for the wearable device. The instructions, when executed by the at least one processor, may cause the electronic device to perform a setting procedure for the wearable device based on the identification information.

In embodiments, a non-transitory computer-readable medium is provided. The non-transitory computer-readable medium may include memory storing instructions. The instructions, when executed by at least one processor, may cause the wearable device to broadcast an advertising signal, receive, from an electronic device, user identification information associated with the electronic device, transmit, to the electronic device, response information indicating that the user identification information associated with the electronic device corresponds to user identification information associated with the wearable device, receive, from the electronic device, a request message for changing a mode of the wearable device, after transmitting the response information, change the mode of the wearable device, based on the request message, to a transfer mode for connecting the electronic device to the wearable device without a reset of the wearable device, and transmit, to the electronic device, a response message for the request message. The response message may include identification information for the wearable device. The instructions, when executed by the at least one processor, may cause the wearable device to perform a connection procedure with the electronic device based on the identification information.

In embodiments, a first electronic device is provided. The first electronic device may include wireless communication circuitry, a display, memory storing instructions, and at least one processor. The instructions, when executed by the at least one processor, may cause the first electronic device to transmit, to a second electronic device through the wireless communication circuitry, data related to a wearable device, transmit, through the wireless communication circuitry, an instruction message for changing a mode of the wearable device to a transfer mode for connecting the second electronic device without a reset of the wearable device, after transmitting the data related to the wearable device, and after transmitting the instruction message, perform a disconnection procedure with the wearable device based on a request from the wearable device. The instruction message may be used to broadcast an advertising signal according to the transfer mode in the wearable device.

In embodiments, a method executed by a first electronic device is provided. The method may include transmitting by the first electronic device, to a second electronic device, data related to a wearable device, transmitting an instruction message for changing a mode of the wearable device to a transfer mode for connecting the second electronic device without a reset of the wearable device, after transmitting the data related to the wearable device, and performing a disconnection procedure with the wearable device based on a request from the wearable device after transmitting the instruction message. The instruction message may be used to broadcast an advertising signal according to the transfer mode in the wearable device.

In embodiments, a non-transitory computer-readable recording medium is provided. The non-transitory computer-readable recording medium may include memory storing instructions. The instructions, when executed by at least one processor, may cause a first electronic device to transmit, to a second electronic device through the wireless communication circuitry, data related to a wearable device, transmit, through the wireless communication circuitry, an instruction message for changing a mode of the wearable device to a transfer mode for connecting the second electronic device without a reset of the wearable device, after transmitting the data related to the wearable device, and after transmitting the instruction message, perform a disconnection procedure with the wearable device based on a request from the wearable device. The instruction message may be used to broadcast an advertising signal according to the transfer mode in the wearable device.

In embodiments, a method executed by a wearable device is provided. The method may include receiving, from a first electronic device, an instruction message for changing a mode of the wearable device to a transfer mode for connecting an external electronic device to the wearable device different from the first electronic device without a reset of the wearable device, broadcasting an advertising signal in response to the instruction message, receiving, from a second electronic device, user identification information associated with the second electronic device based on the advertising signal, and performing a connection procedure with the second electronic device, in response to the user identification information associated with the second electronic device corresponding to user identification information associated with the wearable device.

In embodiments, a non-transitory computer-readable recording medium is provided. The non-transitory computer-readable recording medium may include memory storing instructions. The instructions, when executed by at least one processor, may cause a wearable device to receive, from a first electronic device, through the wireless communication circuitry, an instruction message for changing a mode of the wearable device to a transfer mode for connecting an external electronic device to the wearable device different from the first electronic device without a reset of the wearable device, broadcast an advertising signal through the wireless communication circuitry in response to the instruction message, receive, from a second electronic device through the wireless communication circuitry, user identification information associated with the second electronic device based on the advertising signal, and perform a connection procedure with the second electronic device, in response to the user identification information associated with the second electronic device corresponding to user identification information associated with the wearable device.

### [Description of the Drawings]

FIG. 1 is a block diagram of an electronic device in a network environment.
FIG. 2 illustrates an example of an electronic device and a wearable device.
FIG. 3A illustrates an example of an entry screen of an electronic device for a connection transfer.
FIG. 3B illustrates an example of an entry screen of a wearable device.
FIGS. 4A and 4B illustrate examples of a connection transfer after transmitting data.
FIG. 5 illustrates an example of a search procedure of a wearable device.
FIG. 6 illustrates an example of a comparing procedure of user identification information in a connection between a wearable device and an electronic device.
FIG. 7 illustrates examples of a user interface according to a comparison of user identification information.
FIG. 8A illustrates an example of a mode change procedure of a wearable device for a connection transfer.
FIG. 8B illustrates an example of a mode change procedure of a wearable device for a reset.
FIG. 8C illustrates an example of a procedure for guiding a reset of a wearable device.
FIG. 9 illustrates an example of a connection transfer through a mode change of a wearable device.
FIG. 10 illustrates an operation flow of an electronic device for a connection transfer.
FIG. 11 illustrates an operation flow of a wearable device for a connection transfer.
FIG. 12 illustrates an example of an input of account information.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term (e.g., a signal, information, a message, data, or signaling) referring to a signal, a term (e.g., a signal, information, a message, a request, or a response) referring to a message, a term (e.g., initialization, factory initialization, data initialization, a data reset, a factory reset, setting initialization, restart, or a reset) referring to a reset, a term (e.g., a step, an operation, or a procedure) for a calculation status, a term referring to network entities, a term referring to a component of a device, and the like used in the following description are exemplified for convenience of disposition. Therefore, the present disclosure is not limited to terms to be described below, and another term having an equivalent technical meaning may be used.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

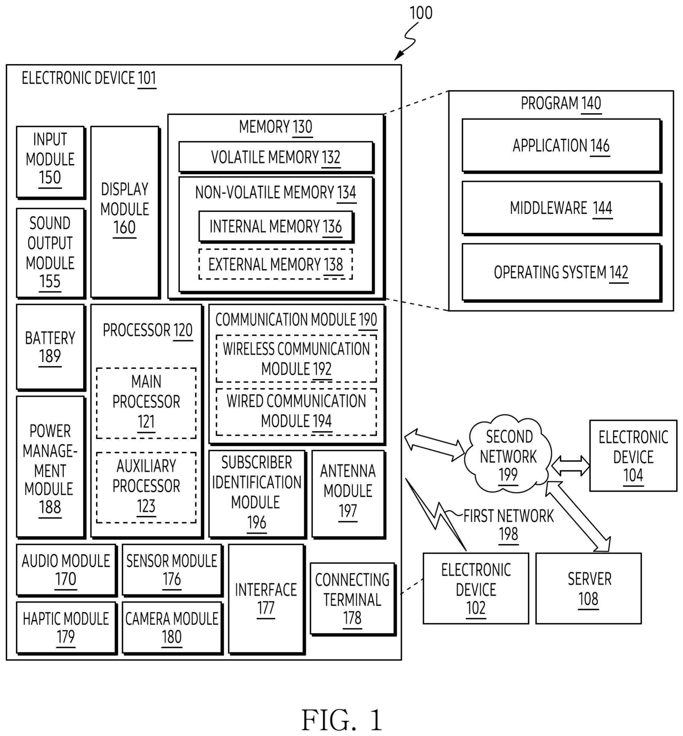

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

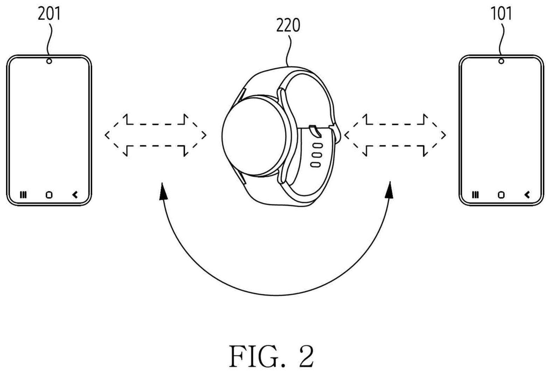

FIG. 2 illustrates an example of an electronic device and a wearable device.

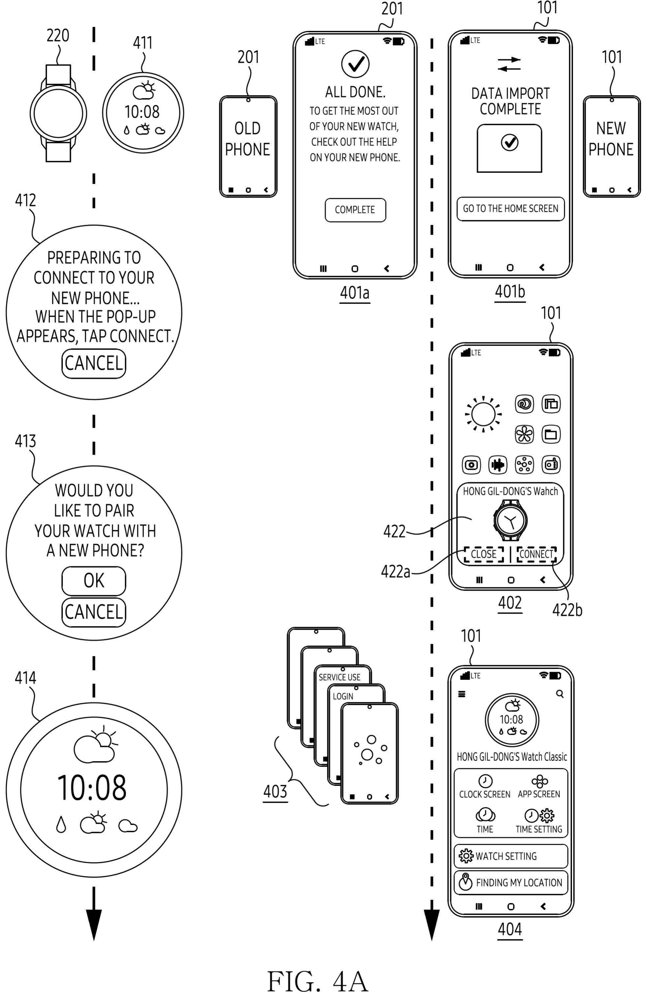

Referring to FIG. 2, an electronic device 201 may be connected to a wearable device 220 (e.g., a wearable device 220 of FIG. 4A). For description of the electronic device 201 and/or the wearable device 220, the electronic device 101 of FIG. 1 may be referred to. The wearable device 220, which is a device wearable on at least a part of a body, may perform various functions. For example, the wearable device 220 may provide information (e.g., a time or a health monitoring result) to a user, display or reproduce data (e.g., an image or music) from an electronic device (e.g., the electronic device 101 or the electronic device 201) of the user, or provide obtained information (e.g., a heart rate or a daily exercise amount) to the electronic device. For example, the wearable device 220 may include wireless communication circuitry for a connection with the electronic device.

The electronic device 201 may be paired with the wearable device 220. For example, the wearable device 220 may include a smart watch. The user of the electronic device 201 may connect the wearable device 220 to the electronic device 201 based on an input to the wearable device 220.

It is assumed that the wearable device 220 is connected to an electronic device (e.g., a smart phone). For example, the wearable device 220 may be connected to the electronic device 201. The user of the electronic device 201 may desire to change a device connected to the wearable device 220. For example, the user may desire to connect the wearable device 220 that was or is being connected to the electronic device 201 to another device (e.g., the electronic device 101). The connection between the wearable device 220 and the electronic device 201 may be released, and a connection between the wearable device 220 and the electronic device 101 may be established. According to an embodiment, the wearable device 220 and the electronic device 101 may be connected based on data used to connect the wearable device 220 and the electronic device 201. Instead of performing all settings with the wearable device 220 again, the electronic device 101 may perform the connection through a more simplified procedure based on the data. On the other hand, in consideration of security and connection stability for the user, the wearable device 220 may be set to be reset when connected to a new device (e.g., a device different from a device recently registered to the wearable device 220). The reset of the wearable device 220 indicates deleting data stored in the wearable device 220. The reset may be referred to as initialization, data initialization, factory initialization, a data reset, a factory reset, or a term having a technical meaning equivalent thereto. When the wearable device 220 is connected to another electronic device (e.g., the electronic device 101), the wearable device 220 may be reset. Due to the reset, an additional time is required to complete the connection between the wearable device 220 and the electronic device 101. The user of the electronic device 101 may feel uncomfortable due to the time required for the connection.

To solve the above-described problem, embodiments of the present disclosure describe a method for connecting the wearable device 220 to a new electronic device (e.g., the electronic device 101) without a reset of the wearable device 220. In a connection of the wearable device 220, embodiments in which a connection with the wearable device 220 is transferred from a previous electronic device (e.g., the electronic device 201) to a new electronic device (e.g., the electronic device 101) are described. When designated conditions are satisfied while the electronic device 101 performs a connection procedure with the wearable device 220, the wearable device 220 may be connected to the electronic device 101 without being reset. According to an embodiment, the wearable device 220 may be required to be set in a mode (hereinafter, a transfer mode) in which a connection with the wearable device 220 is transferred. In addition, the electronic device 101 may be required to recognize that a mode of the wearable device 220 is the transfer mode. In addition, user identification information (e.g., an account, a profile, or an ID) associated with the electronic device 101 may be required to be the same as user identification information (e.g., an account, a profile, or an ID) associated with the wearable device 220. When the designated conditions are satisfied, at least some operations of operations (e.g., an out of box (OOB) procedure) required by the electronic device 101 may be omitted. Due to simplified steps in each of the wearable device 220 and the electronic device 101, not only a time required for setting is reduced, but also convenience may be provided to the user in a process of connecting to a new device. Hereinafter, embodiments of the present disclosure describe procedures for the above-described designated conditions in various situations.

In FIG. 2, a smart watch is illustrated as an example of the wearable device 220. Hereinafter, in order to describe embodiments of the present disclosure, a smart watch including a display is described as an example of the wearable device 220, but embodiments of the present disclosure are not limited thereto. When it is a device that is set in a state requiring a reset when connected to a new device or may be set by an auto connection without a reset, embodiments of the present disclosure may be applied. For example, the wearable device 220 may include a headset. For example, the wearable device 220 may include a speaker. For example, the wearable device 220 may include a smart band. For example, the wearable device 220 may include a wireless earphone.

To describe embodiments of the present disclosure, a mode of the wearable device 220 may be defined. For example, the mode of the wearable device 220 may be a mode (hereinafter, a setup mode) for a setup of the wearable device 220. For example, the mode of the wearable device 220 may be a mode (hereinafter, an auto-connection mode) for automatically connecting to the wearable device 220. The wearable device 220 may be automatically connected to the registered device in a state that a connection with a device registered to the wearable device 220 is released. For example, the mode of the wearable device 220 may be a mode (hereinafter, a transfer mode) for connecting to a new electronic device (e.g., the electronic device 101) without a reset of the wearable device 220. Herein, the new electronic device indicates an electronic device different from a device registered to the wearable device 220.

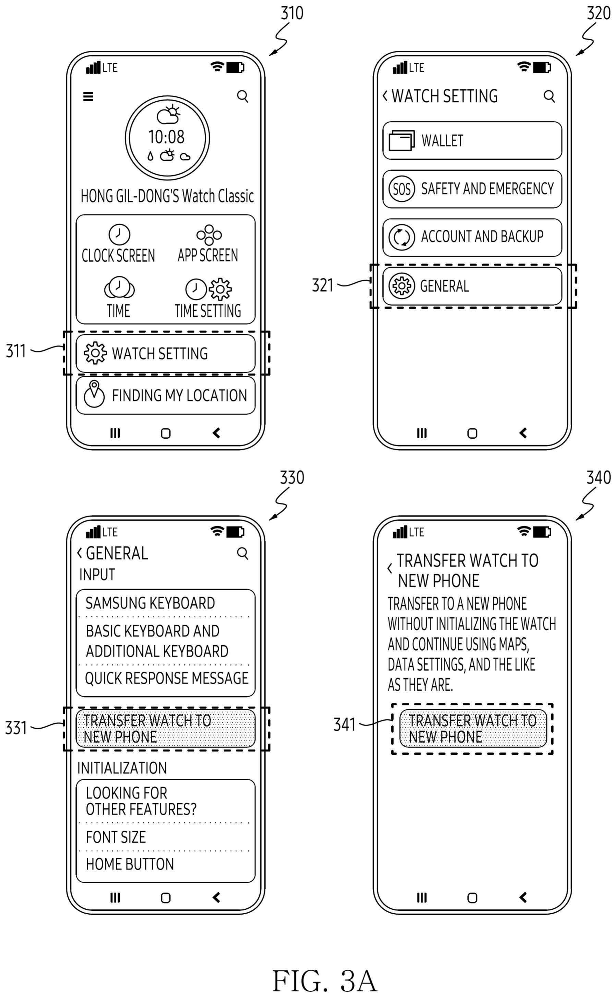

FIG. 3A illustrates an example of an entry screen of an electronic device (e.g., an electronic device 201) for a connection transfer. The connection transfer indicates that a connection of a wearable device 220 is transferred to a new device (e.g., an electronic device (e.g., an electronic device 101)) different from a previously connected device (e.g., the electronic device 201) without a reset of the wearable device 220. A situation in which a device registered for a connection with the wearable device 220 is changed from the electronic device 201 to the electronic device 101 is described.

Referring to FIG. 3A, the electronic device 201 may execute an application for managing the wearable device 220. In response to execution of the application, the electronic device 201 may display a first screen 310. The first screen 310 may include control options (e.g., Clock screen, App screen, Time, Time setting, Watch setting, and Finding my location) for managing one or more devices connected to the electronic device 201. The electronic device 201 may display a visual object 311 for setting (e.g., Watch setting) of the wearable device 220 among the control options. Based on a user input for the visual object 311, the electronic device 201 may display a second screen 320. The electronic device 201 may display categories for setting of the wearable device 220 on the second screen 320. The electronic device 201 may display a visual object 321 indicating a category (e.g., General) among the categories (e.g., Safety and emergency, Account and backup, and General) for the setting of the wearable device 220. Based on a user input for the visual object 321, the electronic device 201 may display a third screen 330. The electronic device 201 may display control options (e.g., Keyboard, Quick response message, Transfer watch to new phone, and Initialization) corresponding to the category on the third screen 330. The electronic device 201 may display a visual object 331 indicating "Transfer watch to new phone" among the control options. Based on a user input for the visual object 331, the electronic device 201 may display a fourth screen 340. The electronic device 201 may display a visual object 341 (e.g., "Transfer watch to new phone") for a connection transfer on the fourth screen 340. The connection transfer may indicate that a device connected to the wearable device 220 is transferred from the electronic device 201 to another electronic device (e.g., the electronic device 101) without a reset of the wearable device 220. In response to a user input for the visual object 341, the electronic device 201 may trigger a change in the mode of the wearable device 220. For example, the electronic device 201 may transmit a signal to the wearable device 220 for changing the mode of the wearable device 220 to a mode for the connection transfer.

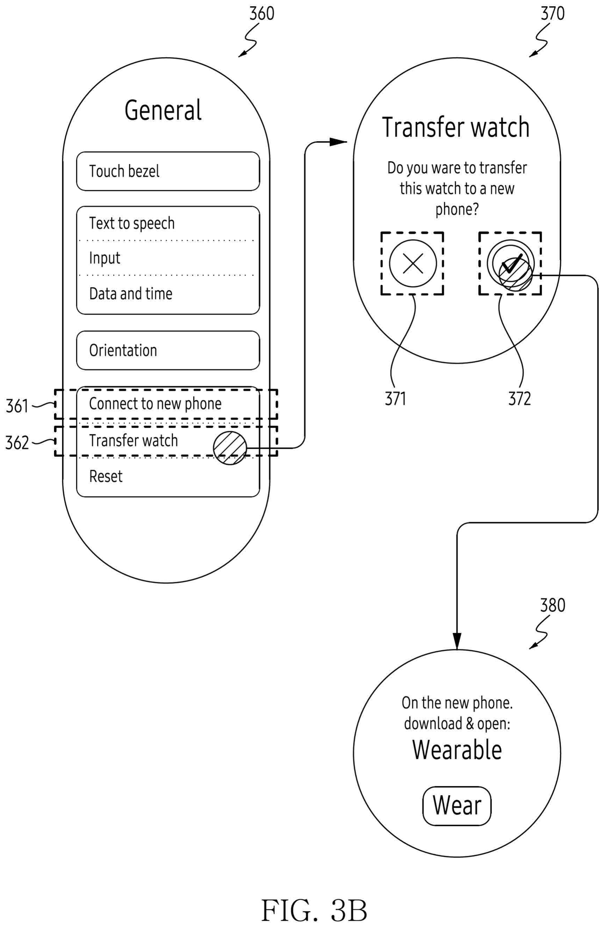

FIG. 3B illustrates an example of an entry screen of a wearable device (e.g., a wearable device 220). The connection transfer indicates that a connection of the wearable device 220 is transferred to a new device (e.g., an electronic device (e.g., an electronic device 101)) different from a previously connected device (e.g., an electronic device 201) without a reset of the wearable device 220. A situation in which a device registered for a connection with the wearable device 220 is changed from the electronic device 201 to the electronic device 101 is described.

Referring to FIG. 3B, the wearable device 220 may execute a setting application. In response to execution of the setting application, the electronic device 201 may display a first screen 360. The first screen 360 may include control options (e.g., 'Touch bezel', 'Text to speech', 'Input', 'Data and Time', 'Orientation', 'Connect to new phone', and 'Transfer Watch') for the wearable device 220. For example, the control options may include a first visual object 361 (e.g., 'Connect to new phone') to be newly connected to a new electronic device and a second visual object 362 (e.g., 'Transfer Watch') to be transferred to another electronic device (e.g., the electronic device 101) without a reset. The first visual object 361 may be used for a connection between the wearable device 220 and the other electronic device (e.g., the electronic device 101) after resetting the wearable device 220. For example, data of the wearable device 220 may be factory-initiated. The second visual object 362 may be used to connect the wearable device 220 and the other electronic device (e.g., the electronic device 101) without a reset of the wearable device 220, that is, to transfer the wearable device 220 to a new device. The electronic device 201 may display a second screen 370 based on the second visual object 362 among the control options of the wearable device 220. For example, the second screen 370 may include a text guiding a user of the wearable device 220 to transfer to a new electronic device (e.g., the electronic device 101). The second screen 370 may include a first visual object 371 for returning to a previous screen (e.g., the first screen 360) and a second visual object 372 indicating that the transfer to the new electronic device is continued. The wearable device 220 may display a third screen 380 based on a user input for the second visual object 372. For example, the third screen 380 may include a text guiding the user of the wearable device 220 about operations required by a new electronic device (e.g., the electronic device 101). As an example, the third screen 380 may include a text (e.g., 'On the new phone or download & open Wearable') guiding installation of an application for managing the wearable device 220.

The wearable device 220 may change a mode of the wearable device 220 based on the user input for the second visual object 372. For example, the wearable device 220 may change the mode of the wearable device 220 to a mode (e.g., a transfer mode) for transferring from the previously connected electronic device to a new electronic device (e.g., the electronic device 101) without a reset of the wearable device 220. As an example, the mode of the wearable device 220 may be changed from a mode (e.g., an auto-connection mode) set for an auto connection with the previously connected electronic device (e.g., the electronic device 201) to the transfer mode.

As described in FIGS. 3A and 3B, the mode of the wearable device 220 may be changed according to a passive user input. As the mode of the wearable device 220 is set to the transfer mode, the wearable device 220 may broadcast an advertising signal indicating the transfer mode. For example, the wearable device 220 may periodically broadcast the advertising signal including information indicating the transfer mode. A device (e.g., the electronic device 101) that has obtained the advertising signal may perform a connection procedure with the wearable device 220 without a reset of the wearable device 220. However, embodiments of the present disclosure are not limited thereto. In addition to the method of passively entering the transfer mode according to a user input, a mode of the wearable device may be induced by the electronic device or changed according to a user input on an induced pop-up.

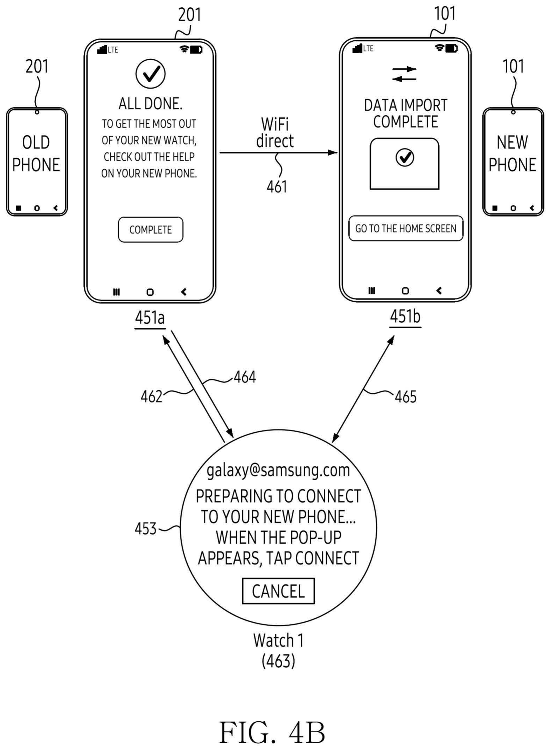

FIGS. 4A and 4B illustrate examples of a connection transfer after transmitting data. A situation in which a device connected to a wearable device 220 changes from an electronic device 201 to an electronic device 101 is described.

Referring to FIG. 4A, the electronic device 201 and the wearable device 220 may be in a connected state. A user of the electronic device 201 may desire to change a device connected to the wearable device 220 to the electronic device 101 instead of the electronic device 201. The user may connect the electronic device 201 and the electronic device 101 wirelessly or wired. Through the connection, data related to the wearable device 220 in the electronic device 201 may be transmitted to the electronic device 101. When all the data are transmitted, the electronic device 201 may display a screen 401a. When all the data are transmitted, the electronic device 101 may display a screen 401b. While the data is being transmitted, the wearable device 220 may display a first screen 411. Since the wearable device 220 is not yet connected to the electronic device 101, the first screen 411 may be displayed in a state of being connected to the electronic device 201.

When the transmission of data from the electronic device 201 is completed, the electronic device 101 may display a screen 402. The electronic device 101 may search for the wearable device 220. For example, the electronic device 101 may receive an advertising signal broadcasted from the wearable device 220. The electronic device 101 may identify a mode of the wearable device 220 based on the advertising signal. The electronic device 101 may identify that the mode of the wearable device 220 is a transfer mode. The transfer mode may indicate that a device connected to the wearable device 220 is transferred from a previously connected electronic device (e.g., the electronic device 201) to an electronic device (e.g., the electronic device 101) without a reset of the wearable device 220. As an example, the mode of the wearable device 220 may be set to the transfer mode according to a user input for the wearable device 220. As another example, the mode of the wearable device 220 may be set to the transfer mode according to a control signal from the electronic device 201 or the electronic device 101. Based on the electronic device 101 identifying that the mode of the wearable device 220 is the 'transfer mode', the electronic device 101 may display a pop-up 422 guiding a connection with the wearable device 220. The pop-up 422 may include a visual object 422a that cancels the connection and a visual object 422b that requests the connection. While the pop-up 422 is displayed in the electronic device 101, the wearable device 220 may display a second screen 412. For example, the second screen 412 may include a text guiding a current status, such as 'Preparing to connect to your new phone. When the pop-up appears, tap Connect'. After a predetermined time elapses, the wearable device 220 may display a third screen 413. For example, the third screen 413 may include a text for asking whether to pair the wearable device 220 and the electronic device 101, such as 'Would you like to pair your watch with a new phone?'.

Based on the mode of the wearable device 220 and a user input for the visual object 422b, the electronic device 101 may perform a setting procedure 403. The setting procedure 403 may indicate a simplified procedure in which some steps of a plurality of steps (e.g., a passkey confirmation step, a terms of service agreement step, a user account login step, and a user-related basic setting step) required for a connection between the wearable device 220 and the electronic device 101 and setting for the wearable device 220 are not performed. According to an embodiment, the electronic device 101 may identify that user identification information (e.g., account information) associated with the wearable device 220 corresponds to user identification information (e.g., account information) associated with the electronic device 101. The electronic device 101 may identify that the mode of the wearable device 220 is the transfer mode. Based on identifying that a user of the wearable device 220 and a user of the electronic device 101 are the same, and that the mode of the wearable device 220 is the transfer mode, the electronic device 101 may perform the setting procedure 403. For example, the electronic device 101 may not perform a procedure of confirming whether a passkey displayed on the wearable device 220 is the same as a passkey displayed on the electronic device 101. The electronic device 101 may perform a setup with the wearable device 220 without the confirmation of the passkey. The electronic device 101 may display a screen 404 based on completion of the setting procedure 403. According to the completion of the setting procedure 403, the wearable device 220 may display a fourth screen 414. The wearable device 220 may display the fourth screen 414 in a state of being connected to the electronic device 101.

Referring to FIG. 4B, the electronic device 201 and the wearable device 220 may be in a connected state. A user of the electronic device 201 may desire to change a device connected to the wearable device 220 to the electronic device 101 instead of the electronic device 201.

According to an embodiment, in operation 461, the electronic device 201 may transmit data to the electronic device 101. The user may connect the electronic device 201 and the electronic device 101 wirelessly or wired. Through the connection, data related to the wearable device 220 in the electronic device 201 may be transmitted to the electronic device 101. For example, the electronic device 201 and the electronic device 101 may be connected through a short-range communication method (e.g., Bluetooth or Wi-Fi Direct). The electronic device 201 may transmit the data through the short-range communication method. The data may include data related to the wearable device 220. For example, the data may include information on an account to be used in the wearable device 220. When all the data are transmitted, the electronic device 201 may display a screen 451a. When all the data are transmitted, the electronic device 101 may display a screen 451b.

In operation 462, the electronic device 201 may transmit a message instructing a mode change to the wearable device 220 in response to completion of the transmission of data. The wearable device 220 may receive the message instructing the mode change from the electronic device 201. The wearable device 220 may change an operation mode to a transfer mode.

In operation 463, after changing the operation mode to the transfer mode, the wearable device 220 may broadcast an advertising signal for a connection with a new electronic device (e.g., the electronic device 101). For example, the wearable device 220 may periodically broadcast the advertising signal. The wearable device 220 may broadcast an advertising signal in a state of being connected to the electronic device 201. While the data is being transmitted, the wearable device 220 may display a screen 453. Since the wearable device 220 is not yet connected to the electronic device 101, the screen 453 may be displayed in a state of being connected to the electronic device 201.

In operation 464, the wearable device 220 may release a connection with the electronic device 201. The wearable device 220 may obtain user identification information (e.g., account information) of the electronic device 101 to be newly connected based on the advertising signal. The wearable device 220 may confirm that the account information of the electronic device 101 is the same as an account (e.g., an account registered to the wearable device 220 or an account mapped to the wearable device 220) of the wearable device 220. The wearable device 220 may release a connection with the electronic device 201 in order to be connected to the electronic device 101.

According to an embodiment, when data transfer to the electronic device 101 is completed, the wearable device 220 may release a connection with the electronic device 201. For example, after being connected to the electronic device 101, the wearable device 220 may identify that all data transfer to the electronic device 101 has been completed. For example, the electronic device 201 may transmit an instruction message for changing the mode of the wearable device 220 to a transfer mode for connecting the electronic device 101 without a reset of the wearable device 220. After receiving the instruction message, the electronic device 201 may perform a disconnection procedure with the wearable device 220 based on a request of the wearable device 220. The wearable device 220 may trigger the request of the wearable device 220 in response to identifying that all of the data transfer to the electronic device 101 has been completed. However, a release timing of a connection between the wearable device 220 and the electronic device 201 is not limited thereto. According to another embodiment, the wearable device 220 may release a connection with the electronic device 201 in response to a new connection with the electronic device 101. For example, the wearable device 220 may trigger the request of the wearable device 220 in response to identifying that the wearable device 220 is connected to the electronic device 101.

In operation 465, the wearable device 220 may be connected to the electronic device 101. The wearable device 220 may perform a connection with the electronic device 101 without a reset of the wearable device 220. The wearable device 220 may perform a connection with the electronic device 101 while operating in the transfer mode.

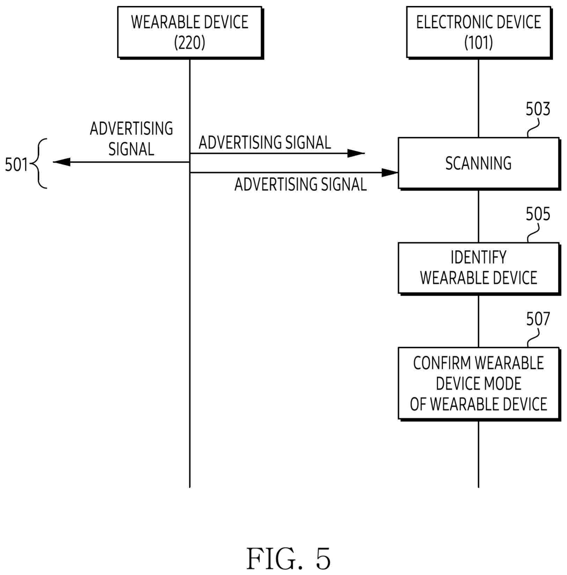

FIG. 5 illustrates an example of a search procedure of a wearable device (e.g., a wearable device 220). The wearable device 220 may be in a state in which a connection with an electronic device 201 is released.

Referring to FIG. 5, in operation 501, the wearable device 220 may broadcast an advertising signal. The advertising signal broadcasted by the wearable device 220 may indicate a mode of the wearable device 220. For example, a data structure of the advertising signal may have the following data format.

**[Table 1]**

| | | |
|---|---|---|
| length | type | data |

The 'length' indicates a length, and the 'type' indicates a type. The 'data' indicates data according to the type. For example, for manufacturer specific data, the following table may be referenced.

**[Table 2]**

| Value | Description | Information |
|---|---|---|
| 0xFF | Manufacturer Specific Data (2 or more octets) | The first 2 octets contain the Company Identifier Code followed by additional manufacturer specific data |

When a type of the data structure of the advertising signal indicates '0xFF', data of the data structure of the advertising signal may indicate the manufacturer specific data. The data may include a company ID and a mode value. For example, a data field in Table 1 may have the following structure.

**[Table 3]**

| Company ID | data (length) | description |
|---|---|---|
| 0x00075 | 0x01 | setup |
| - | 0x02 | auto connection |
| - | 0x03 | auto connection, transfer support |
| - | 0x04 | transfer |

The 'Company ID' may indicate identification information of a manufacturer. The 'data (length)' may indicate a mode of the wearable device. For example, a wearable device that does not support a 'transfer mode' may broadcast an advertising signal including '0x02'. For example, the wearable device 220 may support the 'transfer mode' and be in a state of being connected to and then released from an electronic device (e.g., the electronic device 201). The wearable device 220 may broadcast an advertising signal including the '0x03' for an auto connection with the electronic device. For example, the wearable device 220 may be in a state in which it has been connected to an electronic device (e.g., the electronic device 201) and then is to be connected to another electronic device (e.g., an electronic device 101) without a reset of the wearable device 220. The wearable device 220 may broadcast an advertising signal including the '0x04' for a connection transfer.

According to an embodiment, the wearable device 220 may be in a state in which a connection with the electronic device 201 is released. The mode of the wearable device 220 may be, currently, set to an auto-connection mode. The wearable device 220 may broadcast an advertising signal including a value set to the '0x03' in order to be automatically connected to the electronic device 201. The electronic device 101 may attempt to change the mode of the wearable device 220.

In operation 503, the electronic device 101 may perform scanning. The electronic device 101 may perform scanning in an advertising channel. The electronic device 101 may monitor signals (e.g., an advertising signal) transmitted from an external device. The electronic device 101 may periodically perform scanning. The electronic device 101 may obtain a list of one or more devices that may be connected to the electronic device 101 based on the scanning result.

In operation 505, the electronic device 101 may identify the wearable device 220. The electronic device 101 may receive an advertising signal of the wearable device 220. The electronic device 101 may discover the wearable device 220. The electronic device 101 may identify the wearable device 220 from the list of one or more devices that may be connected to the electronic device 101. For example, the electronic device 101 may identify the wearable device 220 based on a user input from the list of the one or more devices.

In operation 507, the electronic device 101 may confirm the mode of the wearable device 220. The electronic device 101 may obtain an advertising signal of the wearable device 220. The electronic device 101 may identify the mode of the wearable device 220 from the advertising signal. For example, data of the advertising signal may indicate a value set to the '0x03' in addition to the company ID. The wearable device 220 may be in a state in which a connection with the electronic device 201 is released. The electronic device 101 may identify that the mode of the wearable device 220 is the auto-connection mode.

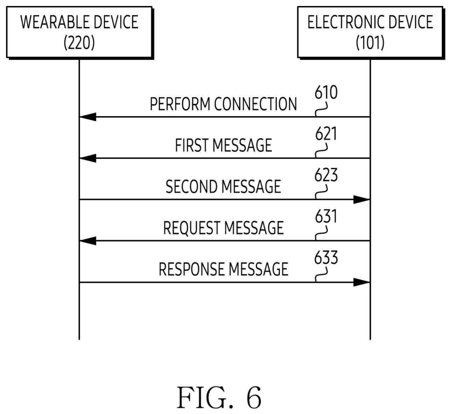

Since the wearable device 220 is connected to another electronic device 201 other than the electronic device 101, information on the electronic device 201 may be in a state of currently being registered to the wearable device 220. For a new connection between the wearable device 220 and the electronic device 101, a reset of the wearable device 220 may be required. However, when the wearable device 220 is set to the transfer mode for a connection transfer and the user of the wearable device 220 and the user of the electronic device 101 are the same, the reset of the wearable device 220 may not be required. The wearable device 220 may not be reset, and the electronic device 101 and the wearable device 220 may be connected. In a case that the user of the wearable device 220 and the user of the electronic device 101 are the same, since the connection may be transferred without a reset of the wearable device 220, a comparison between user identification information associated with the wearable device 220 and user identification information associated with the electronic device 101 may be required. Hereinafter, in FIG. 6, a procedure for determining whether the user of the wearable device 220 and the user of the electronic device 101 are the same will be described.

FIG. 6 illustrates an example of a comparing procedure of user identification information in a connection between a wearable device (e.g., a wearable device 220) and an electronic device (e.g., an electronic device 101). The comparing procedure may be used to determine whether a user of the electronic device 101 and a user of the wearable device 220 are the same. In the present disclosure, the user identification information may be referred to as not only user identification information, but also account information, user information, profile information, a user ID, an identifier, or a term having a technical meaning equivalent thereto.

Referring to FIG. 6, in operation 610, the electronic device 101 may perform a connection with the wearable device 220. For example, the electronic device 101 may perform a Bluetooth low energy (BLE) connection with the wearable device 220. The electronic device 101 may obtain an advertising signal of the wearable device 220 through scanning. In order for the electronic device 101 to connect with the wearable device 220, the electronic device 101 may transmit a connection request message to the wearable device 220. For example, the wearable device 220 may periodically transmit an advertising signal. The wearable device 220 may receive the connection request message after transmitting the advertising signal. A connection (e.g., a BLE connection) between the electronic device 101 and the wearable device 220 may be established through the connection request message. For example, the connection may include, as a BLE communication protocol, a generic attribute profile (GATT) connection between the electronic device 101 and the wearable device 220. As a non-limiting example, the wearable device 220 may cease transmitting the advertising signal after receiving the connection request message.

In operation 621, the electronic device 101 may transmit a first message to the wearable device 220. For example, the electronic device 101 may transmit the first message to the wearable device 220 through the BLE connection. The first message may include feature information on the electronic device 101. For example, the first message may include information indicating that the electronic device 101 supports a connection transfer to the wearable device 220. The connection transfer indicates that the wearable device 220 supports a connection to a new device without a reset of the wearable device 220. For example, the new device may indicate a device that is not registered to the wearable device 220. For example, the new device may indicate another device other than a device most recently registered to the wearable device 220.

In operation 623, the electronic device 101 may receive a second message from the wearable device 220. For example, the electronic device 101 may receive the second message from the wearable device 220 through the BLE connection. The second message may include feature information on the wearable device 220. For example, the second message may include information indicating that the wearable device 220 supports a connection transfer. The connection transfer indicates that the wearable device 220 supports a connection to a new device without a reset of the wearable device 220.

In operation 631, the electronic device 101 may transmit a request message to the wearable device 220. For example, the electronic device 101 may transmit a request message to the wearable device 220 through the BLE connection. The request message may include user identification information associated with the electronic device 101. For example, the request message may include account information, profile information, and/or an ID of the user of the electronic device 101. The request message may be used to request confirmation on whether the user identification information associated with the electronic device 101 corresponds to user identification information associated with the wearable device 220. The wearable device 220 may receive the request message. The wearable device 220 may compare the user identification information associated with the electronic device 101 with the user identification information associated with the wearable device 220. On the other hand, the user identification information associated with the electronic device 101 may not exist. For example, it may be in a state that no user is logged in to the electronic device 101. The electronic device 101 may transmit a request message including a designated value (e.g., a null value) to the wearable device 220. Through this, the wearable device 220 may recognize that there is no user logged in to the electronic device 101 through the designated value. In a case that there is no user logged in to the electronic device 101, the wearable device 220 may determine only the presence or absence of the user identification information associated with the wearable device 220.

In operation 633, the electronic device 101 may receive a response message from the wearable device 220. For example, the electronic device 101 may receive a response message from the wearable device 220 through the BLE connection. The wearable device 220 may compare the user identification information associated with the electronic device 101 with the user identification information associated with the wearable device 220. The wearable device 220 may generate a response message including a result of the comparison. The wearable device 220 may transmit the response message to the electronic device 101. The electronic device 101 may identify whether a user of the electronic device 101 is the same as a user of the wearable device 220 based on the response message. For example, the response message may indicate that the user identification information associated with the electronic device 101 corresponds to (e.g., matches) the user identification information associated with the wearable device 220. For example, the response message may indicate that the user identification information associated with the electronic device 101 does not correspond to the user identification information associated with the wearable device 220. The user identification information associated with the electronic device 101 may be different from the user identification information associated with the wearable device 220, or the user identification information associated with the wearable device 220 may not exist. On the other hand, in a case that the request message indicates the absence of the user identification information associated with the electronic device 101, the wearable device 220 may determine only the presence or absence of the user identification information associated with the wearable device 220. The response message may indicate the presence or absence of the user identification information associated with the wearable device 220.

In FIG. 6, an example in which messages are transmitted through the BLE connection after transmitting and scanning an advertising signal has been described, but embodiments of the present disclosure are not limited thereto. For example, information on whether the electronic device 101 supports a connection transfer without a reset of the wearable device 220 may also be transmitted to another device through an advertising signal before the BLE connection. For example, whether user identification information exists in the electronic device 101 (e.g., whether a user is logged in to the electronic device 101) may be transmitted to the wearable device 220 through an advertising signal. Whether user identification information exists in the wearable device 220 (e.g., whether a user is logged in to the wearable device 220) may be transmitted to the electronic device 101 through an advertising signal. For example, the electronic device 101 may broadcast an advertising signal including the user identification information associated with the electronic device 101. The wearable device 220 may broadcast an advertising signal including the user identification information associated with the wearable device 220.

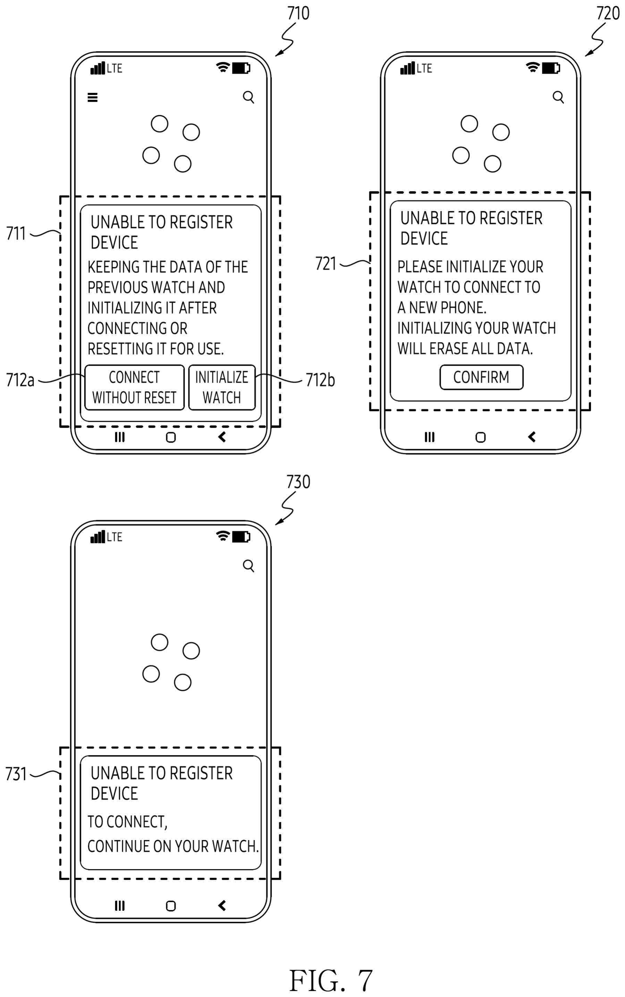

Operations of the electronic device 101 and the wearable device 220 may vary according to the presence or absence of user identification information in each device and whether the user identification information between the two devices is the same. Hereinafter, operations of the electronic device 101 and the wearable device 220 in each situation will be described in FIGS. 7 to 8C.

FIG. 7 illustrates examples of a user interface according to a comparison of user identification information. In FIG. 7, a situation in which both an electronic device 101 and a wearable device 220 support a connection transfer function without a reset is described.

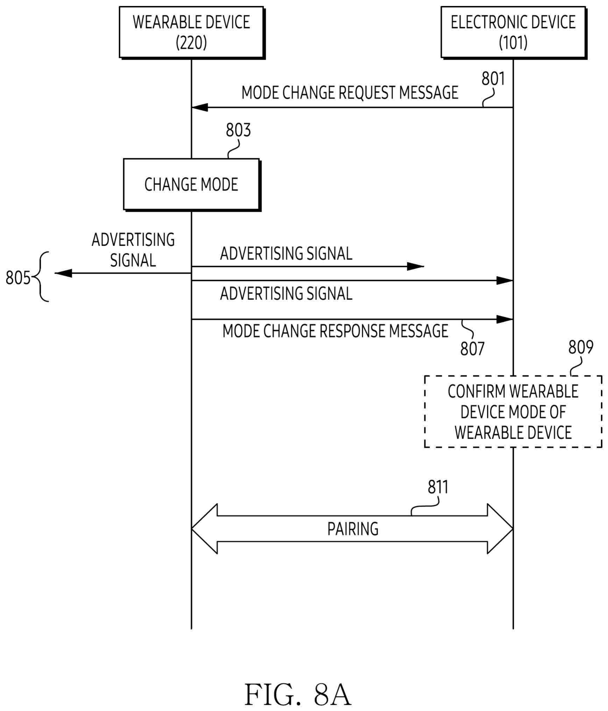

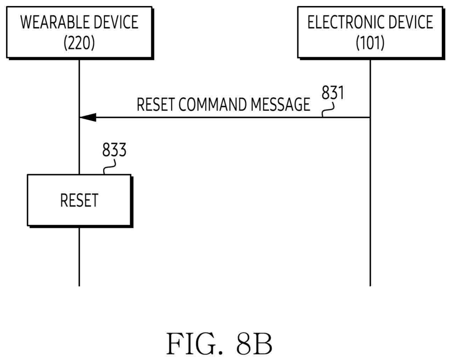

Referring to FIG. 7, in a first example, user identification information associated with the electronic device 101 may correspond to user identification information associated with the wearable device 220. For example, a user account logged in to the electronic device 101 may be the same as a user account logged in to the wearable device 220. After being connected to the wearable device 220, the electronic device 101 may display a first screen 710 through a display. The first screen 710 may include a pop-up 711 for guiding a user to a connection between the electronic device 101 and the wearable device 220. For example, the pop-up 711 may include a text of 'Keeping the data of the previous watch and initializing it after connecting or resetting it for use'. The pop-up 711 may include a first visual object 712a for connecting the electronic device 101 and the wearable device 220 without a reset of the wearable device 220 and a second visual object 712b for connecting the electronic device 101 and the wearable device 220 after resetting the wearable device 220. According to selection of the user of the electronic device 101, the electronic device 101 may be connected to the wearable device 220 without a reset of the wearable device 220, or may be connected to the wearable device 220 after resetting the wearable device 220. When a user input for the first visual object 712a is received, the electronic device 101 may trigger a change in a mode of the wearable device 220. Exemplary operations for changing the mode of the wearable device 220 are described through FIG. 8A. When a user input for the second visual object 712b is received, the electronic device 101 may trigger a reset of the wearable device 220. Exemplary operations for triggering the reset of wearable device 220 are described through FIG. 8B.

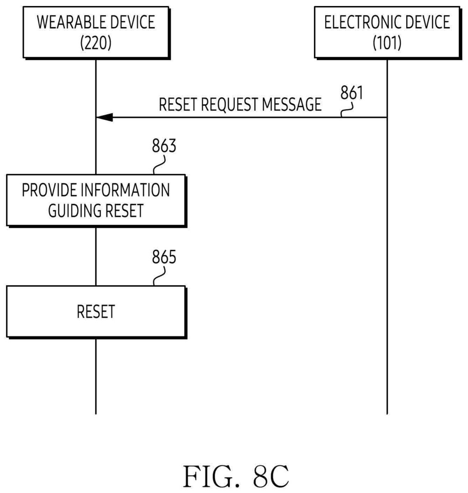

In a second example, the user identification information associated with the electronic device 101 may not correspond to the user identification information associated with the wearable device 220. For example, a user account logged in to the electronic device 101 may be different from a user account logged in to the wearable device 220. For example, a user account logged in to the wearable device 220 may not exist. After being connected to the wearable device 220, the electronic device 101 may display the second screen 720 through the display. The second screen 720 may display a pop-up 721 for guiding the user to a connection between the electronic device 101 and the wearable device 220. For example, the pop-up 721 may include a text of 'Please initialize your watch to connect to a new phone. Initializing your watch will erase all data'. Since the reset of the wearable device 220 is required, the electronic device 101 may provide information to the user such that a next procedure is performed in the wearable device 220. As a non-limiting example, the electronic device 101 may trigger the wearable device 220 such that information (e.g., a pop-up text) guiding a reset of the wearable device 220 is displayed. Exemplary operations for providing the information guiding a reset of the wearable device 220 are described through FIG. 8C.

In a third example, the user identification information associated with the wearable device 220 exists, but the user identification information associated with the electronic device 101 may not exist. For example, the electronic device 101 may not have a logged-in user account, and the wearable device 220 may have a logged-in user account. After being connected to the wearable device 220, the electronic device 101 may display the third screen 730 through the display. The third screen 730 may display a pop-up 731 for guiding the user to a connection between the electronic device 101 and the wearable device 220. For example, the pop-up 731 may include a text of 'To connect, continue on your watch'. Since there is no user identification information associated with the electronic device 101, a procedure for the connection may be performed through the wearable device 220. Although not illustrated in FIG. 7, the wearable device 220 may display a first visual object for a connection with the electronic device 101 without a reset of the wearable device 220 and a second visual object for a connection with the electronic device 101 after resetting the wearable device 220. According to selection of the user of the wearable device 220, the wearable device 220 may be connected to the electronic device 101 without a reset of the wearable device 220, or may be connected to the electronic device 101 after resetting the wearable device 220.

FIG. 8A illustrates an example of a mode change procedure of a wearable device (e.g., a wearable device 220) for a connection transfer. In FIG. 8A, operations of the wearable device 220 and an electronic device 101 are described in a situation in which user identification information associated with an electronic device (e.g., the electronic device 101) does not correspond to user identification information associated with the wearable device 220.

Referring to FIG. 8A, in operation 801, the electronic device 101 may transmit a mode change request message to the wearable device 220. The mode change request message may be used to change a mode of the wearable device 220 to a transfer mode. A user of the electronic device 101 may desire to connect to the wearable device 220 without a reset of the wearable device 220. The electronic device 101 may complete a setting procedure with the wearable device 220 through a simplified procedure (e.g., a setting procedure 403). As described above, in order to connect the electronic device 101 and the wearable device 220 without a reset of the wearable device 220, the mode of the wearable device 220 may operate in the transfer mode, the electronic device 101 may know that the mode of the wearable device 220 is the transfer mode, and user identification information associated with the electronic device 101 may correspond to the user identification information associated with the wearable device 220. Since the wearable device 220 is not operating in the transfer mode, the electronic device 101 may transmit a mode change request message to the electronic device 101 in order to induce the mode of the wearable device 220 to the transfer mode. In order to change the mode of the wearable device 220 set to an auto-connection mode, the electronic device 101 may transmit the mode change request message to the wearable device 220. For example, the electronic device 101 may receive a user input for the first visual object 712a of the pop-up 711 of FIG. 7. The electronic device 101 may transmit the mode change request message to the wearable device 220 in response to a user input for the first visual object 712a.

In operation 803, the wearable device 220 may change the mode of the wearable device 220. The wearable device 220 may receive the mode change request message from the electronic device 101. The mode change request message may indicate the transfer mode. The transfer mode indicates a mode of the wearable device 220 in which the wearable device 220 is set to be connected to a new electronic device (e.g., the electronic device 101) without a reset of the wearable device 220. The wearable device 220 is in a state of being released from a previously connected electronic device (e.g., an electronic device 201). The wearable device 220 is in a state in which a registration history for a previous electronic device is set. The wearable device 220 may be operating in the auto-connection mode for automatically connecting to the previous electronic device when the previous electronic device enters a connectable state again. The wearable device 220 may change the mode of the wearable device 220 from the auto-connection mode to the transfer mode based on the mode change request message.

In operation 805, the wearable device 220 may broadcast an advertising signal. The wearable device 220 may periodically broadcast the advertising signal. After a BLE connection with the electronic device 101 is generated, the wearable device 220 may resume a ceased advertising procedure. The advertising signal broadcasted by the wearable device 220 may indicate the mode of the wearable device 220. For example, as described in the Tables 1 to 3, the advertising signal may indicate the mode of the wearable device 220 through manufacturer specific data. For example, a value included in the advertising signal may be one of a 'setting mode (0x01), an 'auto-connection mode (0x02), an 'auto-connection mode and transfer support (0x03)', and a 'transfer mode (0x04)'. In the operation 803, since the mode of the wearable device 220 is changed to the transfer mode, a value included in the advertising signal may indicate the 'transfer mode (0x04)'.

In operation 807, the wearable device 220 may transmit a mode change response message to the electronic device 101. The mode change response message may be a response to the mode change request message of the operation 801. The wearable device 220 may provide the electronic device 101 with identification information required for pairing with the electronic device 101. An address used in the advertising procedure, which is a resolvable private random address (RPA) (e.g., 48-bit), may be changed periodically for security. In practice, an address used for data communication may be different from the RPA. Accordingly, in order to be connected to the electronic device 101, the wearable device 220 may provide the electronic device 101 with identification information for a connection between the wearable device 220 and the electronic device 101. The electronic device 101 may transmit a mode change response message including the identification information to the electronic device 101. For example, the wearable device 220 may be connected to the electronic device 101 based on a first communication protocol (e.g., a BLE). The wearable device 220 may attempt to connect with the electronic device 101 based on a second communication protocol (e.g., a Bluetooth classic) for data communication. As a non-limiting example, for the second communication protocol, the identification information may include a basic rate (BR) address or an enhanced data rate (EDR) address.

In operation 809, the electronic device 101 may confirm the mode of the wearable device 220. The electronic device 101 may receive an advertising packet broadcasted from the wearable device 220. The electronic device 101 may perform scanning after being connected to the wearable device 220 (e.g., after the BLE connection). The electronic device 101 may receive an advertising signal broadcasted from the wearable device 220. The electronic device 101 may identify the mode of the wearable device 220 from the advertising signal. The electronic device 101 may identify whether the mode of the wearable device 220 is the transfer mode. The reason for confirming the mode of the wearable device 220 in the electronic device 101 is to recognize that the mode of the wearable device 220 has actually been changed in the electronic device 101. In addition, the electronic device 101 may obtain parameter(s) and/or information required for a connection by obtaining all the advertising signals of the wearable device 220. However, as a non-limiting example, since the mode change request message for changing the mode of the wearable device 220 to the transfer mode in the operation 801 is transmitted, the electronic device 101 may not perform the operation 809. In this example, the electronic device 101 may determine that the mode of the wearable device 220 has been changed to the transfer mode based on receiving the mode change response message.

In operation 811, the electronic device 101 and the wearable device 220 may be paired. For example, the electronic device 101 may perform a pairing with the wearable device 220 based on the mode change response message. For example, the electronic device 101 may perform a pairing with the wearable device 220 based on the identification information. For example, the electronic device 101 may perform a pairing with the wearable device 220 based on the advertising signal of the wearable device 220.

The electronic device 101 may download and/or install an application (e.g., a plug-in related to the wearable device 220). The electronic device 101 may initiate a setting procedure (e.g., the setting procedure 403). For example, the setting procedure may indicate a simplified procedure in which at least one step of a plurality of steps (e.g., a passkey confirmation step, a terms of service agreement step, a user account login step, and a user-related basic setting step) required for setting is not performed. For example, the electronic device 101 may not perform a procedure of confirming whether a passkey displayed on the wearable device 220 is the same as a passkey displayed on the electronic device 101. The electronic device 101 may perform a next step without a pairing confirmation. For example, the electronic device 101 may not display a screen requesting user login.

In FIG. 8A, an example in which the electronic device 101 changes the mode of the wearable device 220 to the transfer mode in a state that the wearable device 220 is set to the auto-connection mode has been described, but embodiments of the present disclosure are not limited thereto. For example, the user of the wearable device 220 may also change the mode of the wearable device 220 according to a user input, as in the way illustrated in FIG. 3B. The wearable device 220 may change the mode of the wearable device 220 to the transfer mode based on a series of user inputs. The electronic device 101 may not transmit the mode change request message. For example, the electronic device 101 may download and/or install an application (e.g., a plug-in related to the wearable device 220) or initiate a setting procedure (e.g., the setting procedure 403) in response to receiving an advertising signal indicating that the wearable device 220 operates in the transfer mode.

FIG. 8B illustrates an example of a mode change procedure of the wearable device (e.g., the wearable device 220) for a reset. In FIG. 8B, operations of the wearable device 220 and the electronic device 101 are described in a situation in which the user identification information associated with the electronic device (e.g., the electronic device 101) does not correspond to the user identification information associated with the wearable device 220.

Referring to FIG. 8B, in operation 831, the electronic device 101 may transmit a reset command message to the wearable device 220. The electronic device 101 may transmit the reset command message such that the wearable device 220 performs a reset. For example, the reset command message may include a mode change request message. The mode change request message may be used to change the mode of the wearable device 220 to a setting mode for a reset. For example, the electronic device 101 may receive a user input for the second visual object 712b of the pop-up 711 of FIG. 7. The electronic device 101 may transmit the reset command message to the wearable device 220 based on the user input for the second visual object 712b.

In operation 833, the wearable device 220 may perform a reset. The electronic device 101 may perform the reset based on the reset command message. For example, the second visual object 712b of the pop-up 711 of FIG. 7 may indicate a connection between the electronic device 101 and the wearable device 220 after the reset of the wearable device 220. The wearable device 220 may recognize that an intention of the user of the electronic device 101 is a reset of the wearable device 220. The wearable device 220 may initiate the reset in response to the reset command message.

FIG. 8C illustrates an example of a procedure for guiding a reset of the wearable device (e.g., the wearable device 220). In FIG. 8C, operations of the wearable device 220 and the electronic device 101 are described in a situation in which the user identification information associated with the electronic device (e.g., the electronic device 101) does not correspond to the user identification information associated with the wearable device 220. For example, a user account logged in to the electronic device 101 may be different from a user account logged in to the wearable device 220. For example, a user account logged in to the wearable device 220 may not exist.

Referring to FIG. 8C, in operation 861, the electronic device 101 may transmit a reset request message to the wearable device 220. The reset request message may be used to guide the reset to the wearable device 220. Since the user of the electronic device 101 may be different from the user of the wearable device 220, the electronic device 101 may transmit the reset request message to guide the reset to the user of the wearable device 220.

In operation 863, the wearable device 220 may provide information (e.g., a screen, a pop-up, or a text) guiding a reset. The wearable device 220 may provide information guiding the reset based on the reset request message. For example, the wearable device 220 may display a pop-up screen guiding the reset of the wearable device 220 through a display of the wearable device 220. For example, the wearable device 220 may output a sound signal guiding the reset of the wearable device 220 through a speaker module of the wearable device 220.

In operation 865, the wearable device 220 may perform a reset. The wearable device 220 may perform a reset of the wearable device 220 based on a user input. For example, when the user identification information associated with the electronic device 101 is different from the user identification information associated with the wearable device 220, a connection transfer without a reset may be difficult. Accordingly, the wearable device 220 may perform a reset. For example, when there is no account information logged in to the wearable device 220, it is difficult to determine that the user of the wearable device 220 and the user of the electronic device 101 are the same. Accordingly, the wearable device 220 may perform a reset.

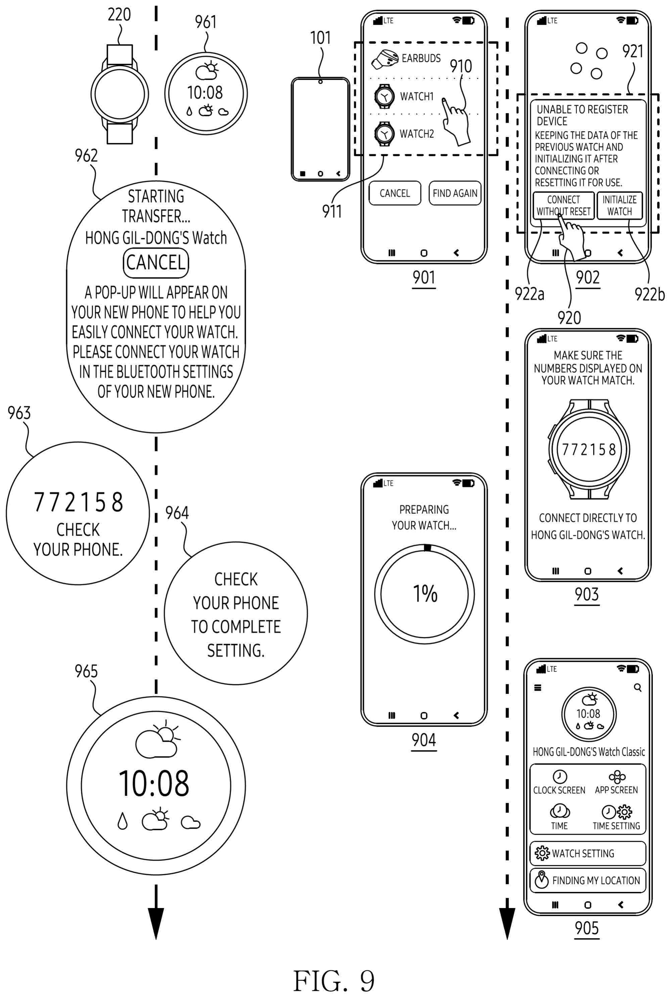

FIG. 9 illustrates an example of a connection transfer through a mode change of a wearable device (e.g., a wearable device 220). A situation in which the wearable device 220 is connected to a new electronic device (e.g., an electronic device 101) is described. The wearable device 220 was previously connected to and then is being released from an electronic device (e.g., an electronic device 201) different from the electronic device 101. Since information on the electronic device 201 is registered to the wearable device 220, the wearable device 220 may be in a situation of being set to an auto-connection mode in order to be connected to the electronic device 201 again. In order to transfer a connection target of the wearable device 220 to the electronic device 101 without a reset of the wearable device 220, a mode of the wearable device 220 should be changed to a transfer mode.

Referring to FIG. 9, the electronic device 101 may perform scanning. The electronic device 101 may search for one or more connectable devices based on the scanning. The electronic device 101 may identify the wearable device 220 based on a user input 910 among the one or more devices. For example, on a first screen 901, the electronic device 101 may display a list 911 of the one or more searched devices. The electronic device 101 may identify the user input 910 indicating the wearable device 220 among the one or more devices. The electronic device 101 may identify the wearable device 220 among the one or more devices. The wearable device 220 may display a first screen 961. The connection between the wearable device 220 and the electronic device 201 is in a released state. The wearable device 220 may broadcast an advertising signal. For example, the advertising signal may indicate that a mode of the wearable device 220 is a mode (e.g., an auto-connection mode) for an auto connection with the electronic device 201. Based on the advertising signal, the electronic device 101 may discover the wearable device 220. Accordingly, the electronic device 101 may include the wearable device 220 in the list of the one or more connectable devices.

Based on the user input 910, the electronic device 101 may generate a connection (e.g., a BLE connection) with the wearable device 220. Through the connection, the electronic device 101 may transmit user identification information associated with the electronic device 101 to the wearable device 220. Through the connection, the wearable device 220 may transmit a result of comparing the user identification information associated with the electronic device 101 and user identification information associated with the wearable device 220 to the electronic device 101. When the user identification information associated with the electronic device 101 corresponds to the user identification information associated with the wearable device 220, the electronic device 101 may display information for guiding a connection without a reset of the wearable device 220. For example, an account logged in to the electronic device 101 may match an account logged in to the wearable device 220. The electronic device 101 may display a second screen 902. The second screen 902 may include a pop-up 921 for guiding a user to a connection between the electronic device 101 and the wearable device 220. For example, the pop-up 921 may include a text of 'Keeping the data of the previous watch and initializing it after connecting or resetting it for use'. The pop-up 921 may include a first visual object 922a for connecting the electronic device 101 to the wearable device 220 without a reset of the wearable device 220 and a second visual object 922b for connecting the electronic device 101 to the wearable device 220 after resetting the wearable device 220. According to selection of the user of the electronic device 101, the electronic device 101 may be connected to the wearable device 220 without a reset of the wearable device 220, or may be connected to the wearable device 220 after resetting the wearable device 220.

The electronic device 101 may receive a user input 920 for the first visual object 922a. The electronic device 101 may transmit a mode change request message to the wearable device 220 based on the user input 920. The mode change request message may be used to change the mode of the wearable device 220 from the auto-connection mode to the transfer mode. The mode of the wearable device 220 may be changed such that the wearable device 220 may be connected to the electronic device 101. The wearable device 220 may broadcast an advertising signal based on the change in the mode of the wearable device 220. The wearable device 220 may transmit, to the electronic device 101, identification information for connecting to the electronic device 101. For example, the wearable device 220 may transmit a mode change response message including identification information for a Bluetooth connection with the electronic device 101 to the electronic device 101. The electronic device 101 may initiate a pairing connection with the wearable device 220 based on the identification information. The wearable device 220 may display a second screen 962. The wearable device 220 may operate in the transfer mode. The wearable device 220 may display information (e.g., a text or a voice) indicating that a connection of the wearable device 220 is transferred to the electronic device 101. For example, the second screen 962 may include a text indicating 'A pop-up will appear on your new phone to help you easily connect your watch. If the pop-up doesn't appear, connect your watch through your new phone's Bluetooth settings'.

The electronic device 101 may display a third screen 903. The mode change request message or the mode change response message may not be displayed on a display of the electronic device 101. The display of the electronic device 101 may directly display the third screen 903 in response to the user input 920 on the second screen 902. For example, the user of the electronic device 101 may not display a screen guiding the wearable device 220 to reset or a screen searching for a reconnectable device. The electronic device 101 may perform a setting procedure for the wearable device 220. In general, a newly connected electronic device requires a series of steps (e.g., a passkey confirmation step, a terms of service agreement step, a user account login step, and a user-related basic setting step). A set of the series of steps may be referred to as an OOB procedure, an initial setting procedure, or an out of box experience (OOBE) procedure. However, since the mode of the wearable device 220 is the transfer mode, and the user identification information associated with the wearable device 220 corresponds to the user identification information associated with the electronic device 101, the electronic device 101 may perform a setting procedure (e.g., a setting procedure 403) in which some operations of the series of operations are omitted.

The electronic device 101 may display the third screen 903 through the display of the electronic device 101. On the third screen 903, the electronic device 101 may display a passkey. The passkey may be generated based on information received from the wearable device 220. The wearable device 220 may display a third screen 963 through the display of the wearable device 220. On the third screen 963, the wearable device 101 may display a passkey. The passkey may be generated based on information received from the electronic device 101. If, in a case that the wearable device does not operate in the transfer mode (e.g., in a case of operating in a setting mode), the electronic device may perform a procedure (hereinafter, a passkey confirmation procedure) confirming whether the passkey displayed on the wearable device matches the passkey displayed on the electronic device. The electronic device may ask the user of the electronic device whether the passkeys displayed on both devices match each other. The electronic device may determine whether to continue the setting procedure according to a user input. However, in this way, the procedure for requesting a user input to the user of the electronic device makes the user feel uncomfortable and delayed.

When performing a pairing connection with the wearable device 220 operating in the transfer mode, the electronic device 101 may not perform a procedure confirming whether the passkey (e.g., 772158) displayed on the wearable device 220 matches the passkey (e.g., 772158) displayed on the electronic device. Like the third screen 903, the electronic device 101 may display a fourth screen 904 without a user input after displaying a passkey. In other words, after the third screen 903 is displayed, the fourth screen 904 may be automatically displayed. After pairing with the wearable device 220, the electronic device 101 may perform setting for the wearable device 220. The wearable device 220 may display a fourth screen 964 through the display of the wearable device 220. On the fourth screen 964, the wearable device 101 may indicate that the electronic device 101 is currently performing a setup procedure. For example, the fourth screen 964 may include a text of "Check your phone to complete the setting".

When the setting procedure is completed, the electronic device 101 may display a fifth screen 905. When the setting procedure is completed, the wearable device 220 may display a fifth screen 965. The electronic device 101 and the wearable device 220 may be in a connected state. As a non-limiting example, the electronic device 101 and the wearable device 220 may be connected through a Bluetooth communication protocol (e.g., a Bluetooth classic). For example, the electronic device 101 may transmit data to the wearable device 220. The wearable device 220 may transmit data to the electronic device 101.

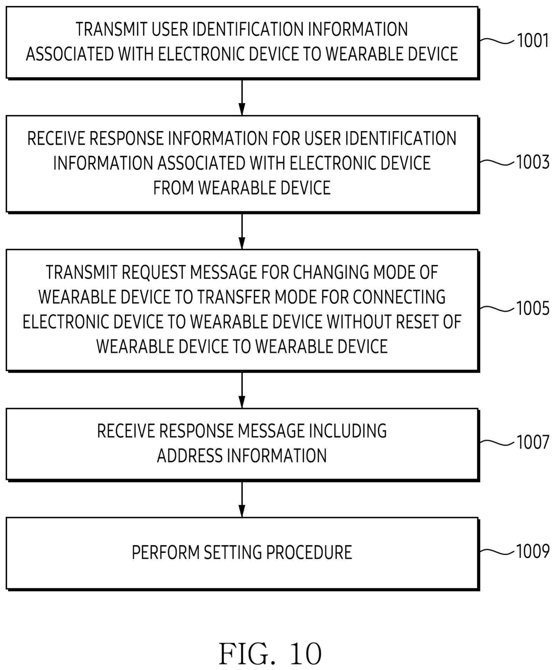

FIG. 10 illustrates an operation flow of an electronic device (e.g., an electronic device 101) for a connection transfer. The connection transfer indicates that a connection with a wearable device 220 is transferred to another device (e.g., the electronic device 101) other than a previously connected device without a reset of a wearable device (e.g., the wearable device 220). For the connection transfer, a user of the wearable device 220 and a user of the electronic device 101 may be the same, and a mode of the wearable device 220 may be required to be set to a transfer mode for a connection without a reset.

Referring to FIG. 10, in operation 1001, the electronic device 101 (e.g., a processor 120) may transmit user identification information associated with the electronic device 101 to the wearable device 220. The electronic device 101 may receive an advertising signal. The advertising signal may be periodically broadcasted from an electronic device (e.g., the wearable device 220) for pairing. The electronic device 101 may receive the advertising signal from the wearable device (e.g., the wearable device 220). The electronic device 101 may identify the wearable device 220 based on the advertising signal and obtain information related to the wearable device 220. For example, the information related to the wearable device 220 may include information on a connection history of the wearable device 220. As an example, the connection history may indicate an electronic device (e.g., a device different from the electronic device 101) to which the wearable device 220 was connected. The electronic device 101 may request the wearable device 220 to confirm whether the user identification information (e.g., account information, profile information, or a user ID) associated with the electronic device 101 corresponds to user identification information (e.g., account information, profile information, or a user ID) associated with the wearable device 220.

In operation 1003, the electronic device 101 may receive response information for the user identification information associated with the electronic device 101 from the wearable device 220. The wearable device 220 may compare the user identification information associated with the electronic device 101 and the user identification information associated with the wearable device 220. The wearable device 220 may transmit response information including a result of the comparison to the electronic device 101. For example, the response information may indicate that the user identification information associated with the electronic device 101 corresponds to the user identification information associated with the wearable device 220. As an example, a user account logged in to the electronic device 101 may be the same as a user account logged in to the wearable device 220. As another example, a group of users logged in to the electronic device 101 may be the same as a group of users logged in to the wearable device 220. Even when the user is not necessarily the same, when the same user uses a plurality of accounts, or when a plurality of users share a device (e.g., the wearable device 220) as a group, a connection without a reset of the present disclosure may be applied. For example, the response information may indicate that the user identification information associated with the electronic device 101 does not correspond to the user identification information associated with the wearable device 220. As an example, a user account logged in to the electronic device 101 may be different from a user account logged in to the wearable device 220. As another example, no user may log in to the wearable device 220. The user identification information associated with the wearable device 220 may not exist.

According to an embodiment, the electronic device 101 may receive response information indicating that the user identification information associated with the electronic device corresponds to the user identification information associated with the wearable device.

In operation 1005, the electronic device 101 may transmit a request message for changing the mode of the wearable device 220 to the transfer mode for connecting the electronic device 101 to the wearable device 220 without a reset of the wearable device 220 to the wearable device 220. For example, currently, the mode of the wearable device 220 may be an auto-connection mode. The wearable device 220 is in a state of being set to a mode for automatically connecting to a previously connected device (e.g., an electronic device 201). The mode of the wearable device 220 may be instructed through an advertising signal broadcasted from the wearable device 220. The electronic device 101 may change the mode of the wearable device 220 to the transfer mode in order to transfer the connection with the wearable device 220. The electronic device 101 may transmit the request message to connect the electronic device 101 to the wearable device 220 without a reset of the wearable device 220. The wearable device 220 may receive the request message from the electronic device 101. Based on the request message, the wearable device 220 may change the mode of the wearable device 220 to the transfer mode.

In operation 1007, the electronic device 101 may receive a response message including identification information. The identification information may be used for a connection between the wearable device 220 and the electronic device 101. The identification information may be used to identify the wearable device 220 in the electronic device 101. The identification information may be used to identify whether a connected device (e.g., the wearable device 220) is the same device as the connected device. For example, the identification information may be used for a connection using a communication protocol (e.g., a Bluetooth classic) different from a communication protocol (e.g., a BLE) through which the user identification information or the response information is transmitted. A BR and/or an EDR, which are addresses, are exemplified as the identification information, but embodiments of the present disclosure are not limited thereto. When it is information that may be mapped to information obtainable during a search process of the wearable device 220, it may be used as the identification information regardless of a type of the information.

In operation 1009, the electronic device 101 may perform a setting procedure (e.g., a setting procedure 403). The setting procedure may include a series of steps for the electronic device 101 to proceed in a state in which pairing and data communication with the wearable device 220 is provable. For example, the setting procedure may include a pairing procedure for a connection between the wearable device 220 and the electronic device 101. The electronic device 101 may be connected to the wearable device 220 based on the identification information. For example, the setting procedure may include a setup procedure for the wearable device 220. After being connected to the wearable device 220, the electronic device 101 may set a basic parameter and interface for interacting with the wearable device 220.

The setting procedure may include at least some of a plurality of steps (e.g., a passkey confirmation step, a terms of service agreement step, a user account login step, and a user-related basic setting step) required for a connection between the wearable device 220 and the electronic device 101 and setting for the wearable device 220. According to an embodiment, as some of the plurality of steps are omitted, the setting procedure may be simplified. For example, when the user logged in to the electronic device 101 is the same as the user logged in to the wearable device 220, and the mode of the wearable device 220 is the transfer mode, the electronic device 101 may not display a user interface asking whether a passkey displayed on the wearable device 220 and a passkey displayed on the electronic device 101 match. While the electronic device 101 performs the setting procedure, the passkey confirmation step may be omitted. For example, when the user logged in to the electronic device 101 is the same as the user logged in to the wearable device 220, a basic setting of the wearable device 220 may be transferred as it is. The electronic device 101 does not need to request a basic setting for the wearable device 220 to the user of the electronic device 101. While the electronic device 101 performs the setting procedure, the user-related basic setting step may be omitted.

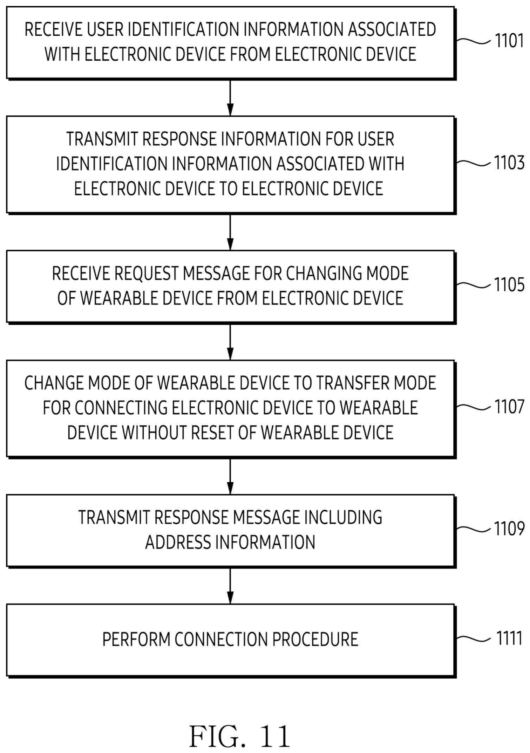

FIG. 11 illustrates an operation flow of a wearable device (e.g., a wearable device 220) for a connection transfer. The connection transfer indicates that a connection with the wearable device 220 is transferred to another device (e.g., an electronic device 101) other than a previously connected device without a reset of the wearable device 220. For the connection transfer, a user of the wearable device 220 and a user of the electronic device 101 may be the same, and a mode of the wearable device 220 may be required to be set to a transfer mode for a connection without a reset.

Referring to FIG. 11, in operation 1101, the wearable device 220 may receive user identification information associated with the electronic device 101 from the electronic device 101. The wearable device 220 may compare the user identification information (e.g., account information, profile information, or a user ID) associated with the electronic device 101 and user identification information (e.g., account information, profile information, or a user ID) associated with the wearable device 220. Although not illustrated in FIG. 11, the wearable device 220 may broadcast an advertising signal. The wearable device 220 may periodically broadcast the advertising signal for pairing. The wearable device 220 may transmit the advertising signal to the electronic device 101. The advertising signal may obtain information for identifying the wearable device 220 and information related to the wearable device 220. For example, the information related to the wearable device 220 may include information on a connection history of the wearable device 220. As an example, the connection history may indicate an electronic device to which the wearable device 220 is connected.

In operation 1103, the wearable device 220 may transmit response information for the user identification information associated with the electronic device 101 to the electronic device 101. The wearable device 220 may transmit response information including a result of the comparison to the electronic device 101. For example, the response information may indicate that the user identification information associated with the electronic device 101 corresponds to the user identification information associated with the wearable device 220. As an example, a user account logged in to the electronic device 101 may be the same as a user account logged in to the wearable device 220. As another example, a group of users logged in to the electronic device 101 may be the same as a group of users logged in to the wearable device 220. Even when the user is not necessarily the same, when the same user uses a plurality of accounts, or when a plurality of users share a device (e.g., the wearable device 220) as a group, a connection without a reset of the present disclosure may be applied. For example, the response information may indicate that the user identification information associated with the electronic device 101 does not correspond to the user identification information associated with the wearable device 220. As an example, a user account logged in to the electronic device 101 may be different from a user account logged in to the wearable device 220. As another example, no user may log in to the wearable device 220. The user identification information associated with the wearable device 220 may not exist.

According to an embodiment, the response information may indicate that the user identification information associated with the electronic device corresponds to the user identification information associated with the wearable device.

In operation 1105, the wearable device 220 may receive a request message for changing the mode of the wearable device 220 from the electronic device 101. For example, currently, the mode of the wearable device 220 may be an auto-connection mode. The wearable device 220 is in a state of being set to a mode for automatically connecting to a previously connected device (e.g., an electronic device 201). The electronic device 101 may recognize the mode of the wearable device 220 through an advertising signal broadcasted from the wearable device 220. The electronic device 101 may attempt to change the mode of the wearable device 220 in order to connect the electronic device 101 and the wearable device 220 without a reset of the wearable device 220.

In operation 1107, the wearable device 220 may change the mode of the wearable device 220 to the transfer mode for connecting the electronic device 101 to the wearable device without a reset of the wearable device 220. The wearable device 220 may change the mode of the wearable device 220 to the transfer mode based on the request message.

In operation 1109, the wearable device 220 may transmit a response message including identification information. The identification information may be used for a connection between the wearable device 220 and the electronic device 101. The identification information may be used to identify the wearable device 220 in the electronic device 101. The identification information may be used to identify whether a connected device (e.g., the wearable device 220) is the same device as the connected device. For example, the identification information may be used for a connection using a communication protocol (e.g., a Bluetooth classic) different from a communication protocol (e.g., a BLE) through which the user identification information or the response information is transmitted. A BR and/or an EDR, which are addresses, are exemplified as the identification information, but embodiments of the present disclosure are not limited thereto. When it is information that may be mapped to information obtainable during a search process of the wearable device 220, it may be used as the identification information regardless of a type of the information.

In operation 1111, the wearable device 220 may perform a connection procedure. The wearable device 220 may perform the connection procedure with the electronic device 101 based on the identification information. For example, the wearable device 220 may perform pairing with the electronic device 101. The wearable device 220 may perform a connection using a communication protocol (e.g., a Bluetooth classic) with the electronic device 101 based on the identification information. Although not illustrated in FIG. 11, after the pairing, while the electronic device 101 performs a setup for the wearable device 220, the wearable device 220 may display a screen indicating that the electronic device 101 is being set up. For example, the wearable device 220 may display the fourth screen 964 of FIG. 9.

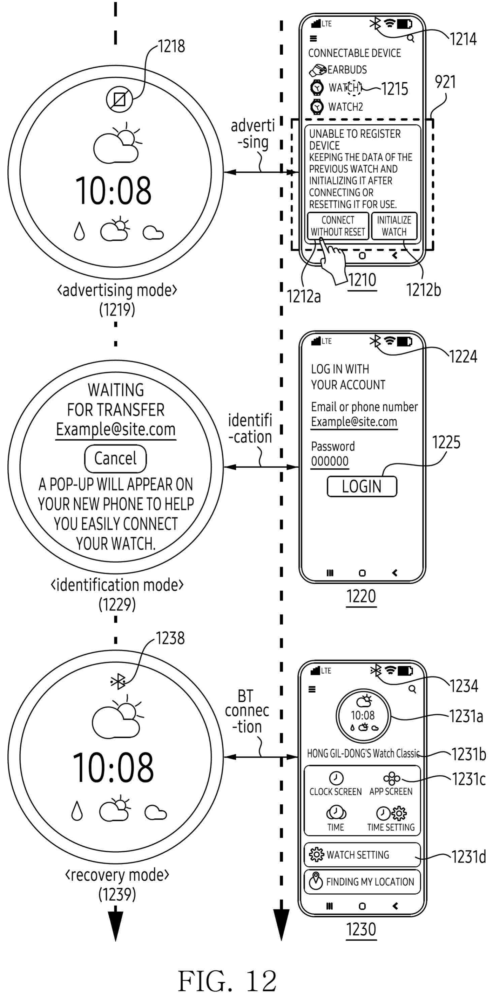

FIG. 12 illustrates an example of an input of account information. In FIG. 12, a situation in which a wearable device 220 is connected to a new electronic device (e.g., an electronic device 101) is described. The wearable device 220 was previously connected to and then is being released from another electronic device (e.g., an electronic device 201). For example, since there is no account information inputted to the electronic device 101, a situation for inducing the user to input the account information is described.

Referring to FIG. 12, the wearable device 220 may operate in an advertising mode. The wearable device 220 may broadcast an advertising signal. The electronic device 101 may receive an advertising signal. The electronic device 101 may display a first screen 1210 based on the advertising signal. The first screen 1210 may include a list of connectable devices. For example, the list of the connectable devices may indicate a 'watch1' 1215 corresponding to the wearable device 220. When user identification information (e.g., account information) exists in the electronic device 101, the electronic device 101 may transmit a request message including the user identification information. However, when there is no user identification information in the electronic device 101, the electronic device 101 may be difficult to register to the wearable device 220. The first screen 1210 may include a pop-up 1211 for guiding the user that there is no probability of registering the electronic device 101. The pop-up 1211 may include a first visual object 1212a for connecting the electronic device 101 to the wearable device 220 without a reset and a second visual object 1212b for connecting the electronic device 101 to the wearable device 220 after resetting the wearable device 220. The electronic device 101 may receive a user input for the 'watch1' 1215 corresponding to the wearable device 220 and a user input for the first visual object 1212a. The wearable device 220 may display a first screen 1219.

The first screen 1210 of the electronic device 101 may include a visual object 1214 indicating that the wearable device 220 is not currently connected to the electronic device 101. The first screen 1219 of the wearable device 220 may include a visual object 1218 indicating that the wearable device 220 is not currently connected to the electronic device 101.

Based on receiving a user input for the 'watch1' 1215 and a user input for the first visual object 1212a, the electronic device 101 may display a second screen 1220. The second screen 1220 may include a screen for inputting account information of the user. The user may attempt to log in after inputting account information. The electronic device 101 may receive a user input on a visual object 1225 corresponding to the 'login'. In response to the user input on the visual object 1225, the electronic device 101 may transmit the inputted account information to the wearable device 220. The second screen 1220 of the electronic device 101 may include a visual object 1224 indicating that the wearable device 220 is not currently connected to the electronic device 101.

The wearable device 220 may operate in an identification mode. The wearable device 220 may display a second screen 1229. The wearable device 220 may perform authentication for account information received from the electronic device 101. The wearable device 220 may determine whether the account information matches the account information registered to the wearable device 220. The wearable device 220 may perform a connection procedure after the authentication is completed. The second screen 1229 may indicate that authentication of the electronic device 101 is currently being performed.

After the authentication is completed, the wearable device 220 may operate in a recovery mode. In the recovery mode, data of the wearable device 220 may be transmitted to the electronic device 101. The electronic device 101 may display a third screen 1230. The third screen 1230 may display information related to data of the wearable device 220. For example, the information related to data of the wearable device 220 may include first restored data 1231a (e.g., a watch face), second restored data 1231b (e.g., a watch name), third restored data 1231c (e.g., a watch screen, an app screen, a time, or a time setting data), and fourth restored data 1231d (e.g., a watch setting). The wearable device 220 may display a third screen 1239. The third screen 1239 may include a visual object 1238 indicating that the wearable device 220 is currently connected to the electronic device 101. Likewise, the third screen 1230 of the electronic device 101 may include a visual object 1234 indicating that the wearable device 220 is currently paired with the electronic device 101.

In embodiments, an electronic device is provided. The electronic device may include wireless communication circuitry, a display, memory storing instructions, and at least one processor. The instructions, when executed by the at least one processor, may cause the electronic device to receive, from a wearable device through the wireless communication circuitry, an advertising signal, transmit, to the wearable device through the wireless communication circuitry, user identification information associated with the electronic device, receive, from the wearable device through the wireless communication circuitry, response information indicating that the user identification information associated with the electronic device corresponds to user identification information associated with the wearable device, transmit, to the wearable device through the wireless communication circuitry, a request message for changing a mode of the wearable device to a transfer mode for connecting the electronic device to the wearable device without a reset of the wearable device, based on the response information, and receive, from the wearable device through the wireless communication circuitry, a response message for the request message. The response message may include identification information for the wearable device. The instructions, when executed by the at least one processor, may cause the electronic device to perform a setting procedure for the wearable device based on the identification information.

According to an embodiment, the instructions, when executed by the at least one processor, may cause the electronic device to display a first visual object for the transfer mode and a second visual object for the reset of the wearable device through the display based on the response information, and generate the request message based on a user input for the first visual object.

According to an embodiment, the instructions, when executed by the at least one processor, may cause the electronic device to receive, from the wearable device through the wireless communication circuitry, response information indicating that user identification information associated with the electronic device does not correspond to user identification information associated with the wearable device, and provide information indicating that the reset of the wearable device is required.

According to an embodiment, the instructions, when executed by the at least one processor, may cause the electronic device to, after transmitting the request message, obtain an advertising signal from the wearable device through the wireless communication circuitry, and perform the setting procedure for the wearable device, based on identifying that the mode of the wearable device is the transfer mode from the advertising signal.

According to an embodiment, the instructions, when executed by the at least one processor, may cause the electronic device to generate a passkey number based on information received from the wearable device, display the generated passkey number through the display, and display a setting screen for the wearable device through the display, without a user input, after displaying the generated passkey number, in a case that the mode of the wearable device is the transfer mode.

According to an embodiment, the instructions, when executed by the at least one processor, may cause the electronic device to obtain a list of one or more devices based on a scanning result, receive a user input for the wearable device among the one or more devices, and establish a connection using a first communication protocol with the wearable device based on the advertising signal of the wearable device. The user identification information may be transmitted through the connection using the first communication protocol. The response information may be received through the connection using the first communication protocol. The advertising signal may indicate that the mode of the wearable device is an auto-connection mode for connecting a device registered to the wearable device.

According to an embodiment, the instructions, when executed by the at least one processor, may cause the electronic device to transmit, to the wearable device through the wireless communication circuitry, a first message including information notifying that the electronic device supports the transfer mode, and receive, from the wearable device through the wireless communication circuitry, a second message including information notifying that the wearable device is capable of supporting the transfer mode. The first communication protocol may include a Bluetooth low energy (BLE).

According to an embodiment, the setting procedure may include a connection procedure using a second communication protocol. The identification information may include an address for a basic rate (BR) or an enhanced data rate (EDR) according to the second communication protocol. The second communication protocol may include a Bluetooth classic.

According to an embodiment, the mode of the wearable device may be instructed based on data of an advertising signal broadcasted from the wearable device. A type of the advertising signal may indicate manufacturer specific data. The data of the advertising signal may indicate one of a setting mode, an auto-connection mode, an auto-connection mode supporting a transfer function, or the transfer mode.

In embodiments, a wearable device is provided. The wearable device may include wireless communication circuitry, memory storing instructions, and at least one processor. The instructions, when executed by the at least one processor, may cause the wearable device to broadcast, through the wireless communication circuitry, an advertising signal, receive, from an electronic device through the wireless communication circuitry, user identification information associated with the electronic device, transmit, to the electronic device, response information indicating that the user identification information associated with the electronic device corresponds to user identification information associated with the wearable device, receive, from the electronic device through the wireless communication circuitry, a request message for changing a mode of the wearable device, after transmitting the response information, change the mode of the wearable device, based on the request message, to a transfer mode for connecting the electronic device to the wearable device without a reset of the wearable device, and transmit, to the electronic device through the wireless communication circuitry, a response message for the request message. The response message may include identification information for the wearable device. The instructions, when executed by the at least one processor, may cause the wearable device to perform a connection procedure with the electronic device based on the identification information.

According to an embodiment, the instructions, when executed by the at least one processor, may cause the wearable device to broadcast an advertising signal according to the mode of the wearable device. A type of the advertising signal may indicate manufacturer specific data. The data of the advertising signal may indicate one of a setting mode, an auto-connection mode, an auto-connection mode supporting a transfer function, or the transfer mode.

According to an embodiment, the instructions, when executed by the at least one processor, may cause the wearable device to broadcast a first advertising signal including a value set to the auto-connection mode, before the request message, and broadcast a second advertising signal including a value set to the transfer mode, after the mode of the wearable device is changed according to the request message.

According to an embodiment, the instructions, when executed by the at least one processor, may cause the wearable device to establish a connection using a first communication protocol with the electronic device based on the advertising signal. The user identification information may be received through the connection using the first communication protocol. The response information may be transmitted through the connection using the first communication protocol. The advertising signal may indicate that the mode of the wearable device is an auto-connection mode for connecting a device registered to the wearable device.

According to an embodiment, the instructions, when executed by the at least one processor, may cause the electronic device to receive, from the electronic device through the wireless communication circuitry, a first message including information notifying that the electronic device is capable of supporting the transfer mode, and transmit, to the electronic device through the wireless communication circuitry, a second message including information notifying that the electronic device is capable of supporting the transfer mode. The first communication protocol may include a Bluetooth low energy (BLE).

According to an embodiment, the connection procedure may use a second communication protocol. The identification information may include an address for a basic rate (BR) or an enhanced data rate (EDR) according to the second communication protocol. The second communication protocol may include a Bluetooth classic.

According to an embodiment, the electronic device may be different from a device registered to the wearable device for an auto connection with the wearable device before the wearable device is connected to the electronic device.

In embodiments, a non-transitory computer-readable medium is provided. The non-transitory computer-readable medium may include memory storing instructions. The instructions, when executed by at least one processor, may cause an electronic device to receive, from a wearable device through the wireless communication circuitry, an advertising signal, transmit, to the wearable device, user identification information associated with the electronic device, receive, from the wearable device, response information indicating that the user identification information associated with the electronic device corresponds to user identification information associated with the wearable device, transmit, to the wearable device, a request message for changing a mode of the wearable device to a transfer mode for connecting the electronic device to the wearable device without a reset of the wearable device, based on the response information, and receive, from the wearable device, a response message for the request message. The response message may include identification information for the wearable device. The instructions, when executed by the at least one processor, may cause the electronic device to perform a setting procedure for the wearable device based on the identification information.

According to an embodiment, the instructions, when executed by the at least one processor, may cause the electronic device to display a first visual object for the transfer mode and a second visual object for the reset of the wearable device based on the response information, and generate the request message based on a user input for the first visual object.

According to an embodiment, the instructions, when executed by the at least one processor, may cause the electronic device to generate a passkey number based on information received from the wearable device, display the generated passkey number, and display a setting screen for the wearable device, without a user input, after displaying the generated passkey number, in a case that the mode of the wearable device is the transfer mode.

According to an embodiment, the mode of the wearable device may be instructed based on data of an advertising signal broadcasted from the wearable device. A type of the advertising signal may indicate manufacturer specific data. The data of the advertising signal may indicate one of a setting mode, an auto-connection mode, an auto-connection mode supporting a transfer function, or the transfer mode.

In embodiments, a non-transitory computer-readable medium is provided. The non-transitory computer-readable medium may include memory storing instructions. The instructions, when executed by at least one processor, may cause the wearable device to broadcast an advertising signal, receive, from an electronic device, user identification information associated with the electronic device, transmit, to the electronic device, response information indicating that the user identification information associated with the electronic device corresponds to user identification information associated with the wearable device, receive, from the electronic device, a request message for changing a mode of the wearable device, after transmitting the response information, change the mode of the wearable device, based on the request message, to a transfer mode for connecting the electronic device to the wearable device without a reset of the wearable device, and transmit, to the electronic device, a response message for the request message. The response message may include identification information for the wearable device. The instructions, when executed by the at least one processor, may cause the wearable device to perform a connection procedure with the electronic device based on the identification information.

In embodiments, a method executed by an electronic device is provided. The method may include receiving, from a wearable device, an advertising signal. The method may include transmitting, to the wearable device, user identification information associated with the electronic device. The method may include receiving, from the wearable device, response information indicating that the user identification information associated with the electronic device corresponds to user identification information associated with the wearable device. The method may include transmitting, to the wearable device, a request message for changing a mode of the wearable device to a transfer mode for connecting the electronic device to the wearable device without a reset of the wearable device, based on the response information. The method may include receiving, from the wearable device, a response message for the request message. The response message may include identification information for the wearable device. The method may include performing a setting procedure for the wearable device based on the identification information.

In embodiments, a method executed by a wearable device is provided. The method may include broadcasting an advertising signal. The method may include receiving, from an electronic device, user identification information associated with the electronic device. The method may include transmitting, to the electronic device, response information indicating that the user identification information associated with the electronic device corresponds to user identification information associated with the wearable device. The method may include receiving, from the electronic device, a request message for changing a mode of the wearable device, after transmitting the response information. The method may include changing the mode of the wearable device, based on the request message, to a transfer mode for connecting the electronic device to the wearable device without a reset of the wearable device. The method may include transmitting, to the electronic device, a response message for the request message. The response message may include identification information for the wearable device. The method may include performing a connection procedure with the electronic device based on the identification information.

In embodiments, a first electronic device is provided. The first electronic device may include wireless communication circuitry, a display, memory storing instructions, and at least one processor. The instructions, when executed by the at least one processor, may cause the first electronic device to transmit, to a second electronic device through the wireless communication circuitry, data related to a wearable device, transmit, through the wireless communication circuitry, an instruction message for changing a mode of the wearable device to a transfer mode for connecting the second electronic device without a reset of the wearable device, after transmitting the data related to the wearable device, and after transmitting the instruction message, perform a disconnection procedure with the wearable device based on a request from the wearable device. The instruction message may be used to broadcast an advertising signal according to the transfer mode in the wearable device.

In embodiments, a method executed by a first electronic device is provided. The method may include transmitting by the first electronic device, to a second electronic device, data related to a wearable device, transmitting an instruction message for changing a mode of the wearable device to a transfer mode for connecting the second electronic device without a reset of the wearable device, after transmitting the data related to the wearable device, and performing a disconnection procedure with the wearable device based on a request from the wearable device after transmitting the instruction message. The instruction message may be used to broadcast an advertising signal according to the transfer mode in the wearable device.

In embodiments, a non-transitory computer-readable recording medium is provided. The non-transitory computer-readable recording medium may include memory storing instructions. The instructions, when executed by at least one processor, may cause a first electronic device to transmit, to a second electronic device through the wireless communication circuitry, data related to a wearable device, transmit, through the wireless communication circuitry, an instruction message for changing a mode of the wearable device to a transfer mode for connecting the second electronic device without a reset of the wearable device, after transmitting the data related to the wearable device, and after transmitting the instruction message, perform a disconnection procedure with the wearable device based on a request from the wearable device. The instruction message may be used to broadcast an advertising signal according to the transfer mode in the wearable device.

In embodiments, a method executed by a wearable device is provided. The method may include receiving, from a first electronic device, an instruction message for changing a mode of the wearable device to a transfer mode for connecting an external electronic device to the wearable device different from the first electronic device without a reset of the wearable device, broadcasting an advertising signal in response to the instruction message, receiving, from the second electronic device, user identification information associated with a second electronic device based on the advertising signal, and performing a connection procedure with the second electronic device, in response to the user identification information associated with the second electronic device corresponding to user identification information associated with the wearable device.

In embodiments, a non-transitory computer-readable recording medium is provided. The non-transitory computer-readable recording medium may include memory storing instructions. The instructions, when executed by at least one processor, may cause a wearable device to receive, from a first electronic device, through the wireless communication circuitry, an instruction message for changing a mode of the wearable device to a transfer mode for an external electronic device to the wearable device different from the first electronic device without a reset of the wearable device, broadcast an advertising signal through the wireless communication circuitry in response to the instruction message, receive, from a second electronic device through the wireless communication circuitry, user identification information associated with the second electronic device based on the advertising signal, and perform a connection procedure with the second electronic device, in response to the user identification information associated with the second electronic device corresponding to user identification information associated with the wearable device.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising:
wireless communication circuitry;
a display;
memory storing instructions; and
at least one processor,
wherein the instructions, when executed by the at least one processor, cause the electronic device to:
receive, from a wearable device through the wireless communication circuitry, an advertising signal;
transmit, to the wearable device through the wireless communication circuitry, user identification information associated with the electronic device,
receive, from the wearable device through the wireless communication circuitry, response information indicating that the user identification information associated with the electronic device corresponds to user identification information associated with the wearable device,
transmit, to the wearable device through the wireless communication circuitry, a request message for changing a mode of the wearable device to a transfer mode for connecting the electronic device to the wearable device without a reset of the wearable device, based on the response information,
receive, from the wearable device through the wireless communication circuitry, a response message for the request message, wherein the response message comprises identification information for the wearable device, and
perform a setting procedure for the wearable device based on the identification information.

2. The electronic device of claim 1,
wherein the instructions, when executed by the at least one processor, cause the electronic device to:
display a first visual object for the transfer mode and a second visual object for the reset of the wearable device through the display based on the response information, and
generate the request message based on a user input for the first visual object.

3. The electronic device of claim 1,
wherein the instructions, when executed by the at least one processor, cause the electronic device to:
receive, from the wearable device through the wireless communication circuitry, response information indicating that user identification information associated with the electronic device does not correspond to user identification information associated with the wearable device, and
provide information indicating that the reset of the wearable device is required.

4. The electronic device of claim 1,
wherein the instructions, when executed by the at least one processor, cause the electronic device to:
after transmitting the request message, obtain an advertising signal from the wearable device through the wireless communication circuitry, and
perform the setting procedure for the wearable device, based on identifying that the mode of the wearable device is the transfer mode from the advertising signal obtained after transmitting the request message.

5. The electronic device of claim 1,
wherein the instructions, when executed by the at least one processor, cause the electronic device to:
generate a passkey number based on information received from the wearable device,
display the generated passkey number through the display, and
display a setting screen for the wearable device through the display, without a user input, after displaying the generated passkey number, in a case that the mode of the wearable device is the transfer mode.

6. The electronic device of claim 1,
wherein the instructions, when executed by the at least one processor, cause the electronic device to:
obtain a list of one or more devices based on a scanning result,
receive a user input for the wearable device among the one or more devices, and
establish a connection using a first communication protocol with the wearable device based on the advertising signal of the wearable device,
wherein the user identification information is transmitted through the connection using the first communication protocol,
wherein the response information is received through the connection using the first communication protocol, and
wherein the advertising signal indicates that the mode of the wearable device is an auto-connection mode for connecting a device registered to the wearable device.

7. The electronic device of claim 6,
wherein the instructions, when executed by the at least one processor, cause the electronic device to:
transmit, to the wearable device through the wireless communication circuitry, a first message including information notifying that the electronic device supports the transfer mode, and
receive, from the wearable device through the wireless communication circuitry, a second message including information notifying that the wearable device is available to support the transfer mode, and
wherein the first communication protocol comprises a Bluetooth low energy (BLE).

8. The electronic device of claim 7,
wherein the setting procedure comprises a connection procedure using a second communication protocol,
wherein the identification information comprises an address for a basic rate (BR) or an enhanced data rate (EDR) according to the second communication protocol, and
wherein the second communication protocol comprises a Bluetooth classic.

9. The electronic device of claim 1,
wherein the mode of the wearable device is indicated based on data of an advertising signal broadcasted from the wearable device,
wherein a type of the advertising signal indicates manufacturer specific data, and
wherein the data of the advertising signal indicates one of a setting mode, an auto-connection mode, an auto-connection mode supporting a transfer function, or the transfer mode.

10. A wearable device, comprising:
wireless communication circuitry;
memory storing instructions; and
at least one processor,
wherein the instructions, when executed by the at least one processor, cause the wearable device to:
broadcast, through the wireless communication circuitry, an advertising signal;
receive, from an electronic device through the wireless communication circuitry, user identification information associated with the electronic device,
transmit, to the electronic device through the wireless communication circuitry, response information indicating that the user identification information associated with the electronic device corresponds to user identification information associated with the wearable device,
receive, from the electronic device through the wireless communication circuitry, a request message for changing a mode of the wearable device, after transmitting the response information,
change the mode of the wearable device, based on the request message, to a transfer mode for connecting the electronic device to the wearable device without a reset of the wearable device,
transmit, to the electronic device through the wireless communication circuitry, a response message for the request message, wherein the response message comprises identification information for the wearable device, and
perform a connection procedure with the electronic device based on the identification information.

11. The wearable device of claim 10,
wherein the instructions, when executed by the at least one processor, cause the wearable device to:
broadcast an advertising signal according to the mode of the wearable device,
wherein a type of the advertising signal indicates manufacturer specific data, and
wherein data of the advertising signal indicates one of a setting mode, an auto-connection mode, an auto-connection mode supporting a transfer function, or the transfer mode.

12. The wearable device of claim 11,
wherein the instructions, when executed by the at least one processor, cause the wearable device to:
broadcast a first advertising signal including a value set to the auto-connection mode, before the request message, and
broadcast a second advertising signal including a value set to the transfer mode, after the mode of the wearable device is changed according to the request message.

13. The wearable device of claim 10,
wherein the instructions, when executed by the at least one processor, cause the wearable device to:
establish a connection using a first communication protocol with the electronic device based on the advertising signal,
wherein the user identification information is received through the connection using the first communication protocol,
wherein the response information is transmitted through the connection using the first communication protocol, and
wherein the advertising signal indicates that the mode of the wearable device is an auto-connection mode for connecting a device registered to the wearable device.

14. The wearable device of claim 13,
wherein the instructions, when executed by the at least one processor, cause the electronic device to:
receive, from the electronic device through the wireless communication circuitry, a first message including information notifying that the electronic device is available to support the transfer mode, and
transmit, to the electronic device through the wireless communication circuitry, a second message including information notifying that the electronic device is available to support the transfer mode,
wherein the first communication protocol comprises a Bluetooth low energy (BLE),
wherein the connection procedure uses a second communication protocol,
wherein the identification information comprises an address for a basic rate (BR) or an enhanced data rate (EDR) according to the second communication protocol, and
wherein the second communication protocol comprises a Bluetooth classic.

15. A non-transitory computer-readable medium comprising:
memory including instructions,
wherein the instructions, when executed by at least one processor, cause an electronic device to:
receive, from a wearable device, an advertising signal;
transmit, to the wearable device, user identification information associated with the electronic device,
receive, from the wearable device, response information indicating that the user identification information associated with the electronic device corresponds to user identification information associated with the wearable device,
transmit, to the wearable device, a request message for changing a mode of the wearable device to a transfer mode for connecting the electronic device to the wearable device without a reset of the wearable device, based on the response information,
receive, from the wearable device, a response message for the request message, wherein the response message comprises identification information for the wearable device, and
perform a setting procedure for the wearable device based on the identification information.
